# EUROPÄISCHE PATENTSCHRIFT

(11) **EP 0 827 987 B1**
(45) Veröffentlichungstag und Bekanntmachung des Hinweises auf die Patenterteilung: **02.11.2000**
(21) Anmeldenummer: 97114795.4
(22) Anmeldetag: 27.08.1997
(51) Int. Cl.: C09B 67/22, C09B 62/51, C09B 62/503

(54) **Farbstoffmischungen von faserreaktiven Azofarbstoffen und ihre Verwendung zum Färben von hydroxy- und/oder carbonamidgruppenhaltigem Fasermaterial**
Mixtures of azo reactive dyes and their use for dyeing fiber material containing hydroxy or carbonamide groups
Mélanges de colorants azoiques réactifs et leur utilisation pour teindre un matériau fibreux contenant des groupes hydroxyles et/ou carbonamides

(30) Priorität: 05.09.1996 DE 19635999
(43) Veröffentlichungstag der Anmeldung: 11.03.1998
(73) Patentinhaber: DyStar Textilfarben GmbH & Co. Deutschland KG, 60318 Frankfurt am Main (DE)
(72) Erfinder: Schumacher, Christian, Dr., 65779 Kelkheim (DE); Russ, Werner Hubert, Dr., 65439 Flörsheim (DE)

(56) Entgegenhaltungen:
- EP-A- 0 679 697
- EP-A- 0 681 008
- EP-A- 0 731 145
- CHEMICAL ABSTRACTS, vol. 109, no. 26, 26.Dezember 1988 Columbus, Ohio, US; abstract no. 232702c, Seite 84; XP000056735 & JP 63 178 170 A (SUMITOMO CHEMICAL CO. LTD.)
- CHEMICAL ABSTRACTS, vol. 114, no. 8, 25.Februar 1991 Columbus, Ohio, US; abstract no. 64186v, G. P. SOHN: "Reactive black dye compositions" XP000191041 & JP 02 202 956 A (REEWHA INDUSTRIAL CO. LTD.)
- DATABASE WPI Week 9117 Derwent Publications Ltd., London, GB; AN 91-123025[17] XP002071657 "Reactive dye compositions" & JP 03 064 372 (SUMITOMO CHEM. IND. KK) , 19.März 1991 & JP 03 064 372 A (SUMITOMO CHEM. IND. KK)
- CHEMICAL ABSTRACTS, vol. 112, no. 24, 11.Juni 1990 Columbus, Ohio, US; abstract no. 218710j, H. KITAWAKI ET. AL.: "Navy blue and orange reactive dye mixtures" Seite 90; XP000064713 & JP 01 315 469 A
- DATABASE WPI Week 9036 Derwent Publications Ltd., London, GB; AN 90-121436[36] XP002071658 "Watersoluble dye mixture" & JP 02 073 870 (MITSUBISHI KASEI CORP.) , 13.März 1990 & JP 02 073 870 A (MITSUBISHI KASEI CORP.)

## Beschreibung

Die Erfindung liegt auf dem technischen Gebiet der faserreaktiven Farbstoffe.

Bei dem Bemühen, die Farbstoffgammen durch moderne Reaktivfarbstoffe zu erweitern oder zu ergänzen, stößt man in vielerlei Hinsicht an Grenzen, die durch eine einzelne Farbstoffkomponente nicht oder nur ungenügend gelöst werden können. Besonders kritisch ist die Synthese von hochschwarzen Farbstoffen ohne Metallkomplex. Der bekannteste schwarze Reaktivfarbstoff ist der mit der Colour-Index-Bezeichnung C.I. Reactive Black 5, einem Disazofarbstoff mit dem 3,6-Disulfo-1-amino-8-naphthol als bivalenter Kupplungskomponente und 4-(β-Sulfatoethylsulfonyl]-anilin als den beiden Diazokomponenten; die Nuance dieses Farbstoffes ist jedoch eher ein trübes Marineblau. Um mit ihm tiefschwarze Färbungen zu erhalten, muß er mit orange- oder rotfärbenden, vorteilhafter jedoch mit gelb- und rotfärbenden Farbstoffen in geringen Mengen vermischt (geschönt) werden. Bei diesen Einstellungen kann auch auf eventuelle Metamerie-Probleme (unterschiedliche Abendfarbe) Rücksicht genommen werden.

Aus den japanischen Patentanmeldungs-Veröffentlichungen Hei-2-073870, Hei-2-202956 und Hei-3-64372 sowie aus den koreanischen Patentschriften Nrs. 91/2676, 91/6386 und 91/8343 sind zwar bereits Farbstoffmischungen bekannt, die sich zur Herstellung von tiefschwarzen Färbungen auf Cellulosefasermaterialien eignen. Diese bekannten Farbstoffmischungen weisen jedoch gewisse anwendungstechnische Mängel auf und liefern zudem Färbungen mit einem unerwünschten Blaustich; insbesondere ihre Auswaschbarkeit, die Naßliegeechtheit und die Ätzbarkeit sind verbesserungsbedürftig. Ebenfalls ist die Lagerstabilität der konzentrierten wäßrigen Lösungen dieser Farbstoffmischungen nicht befriedigend.

Mit der vorliegenden Erfindung wurden nun diesbezüglich vorteilhafte tiefschwarze, nicht blaustichig färbende Farbstoffmischungen gefunden, die einen oder mehrere, wie 2, 3 oder 4, Disazofarbstoffe entsprechend der allgemeinen Formel (1) und einen oder mehrere, wie 2, 3 oder 4, Monoazofarbstoffe entsprechend der allgemeinen Formel (2) enthalten, wobei der oder die Farbstoffe der allgemeinen Formel (2) zu mindestens 3 Mol-%, bevorzugt zu mindestens 5 Mol-%, bezogen auf die Gesamtmenge der Farbstoffe (1) und (2) in der Farbstoffmischung, enthalten sind. 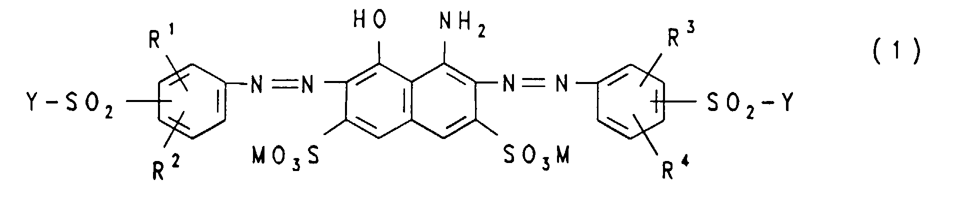 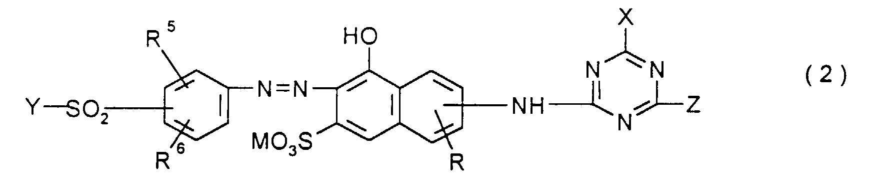 In diesen Formeln bedeuten:
- M: ist Wasserstoff oder ein Alkalimetall, wie Lithium, Natrium und Kalium;
- R¹: ist Wasserstoff, Methyl, Ethyl, Methoxy, Ethoxy oder Sulfo, vorzugsweise Methoxy und Wasserstoff und insbesondere Wasserstoff;
- R²: ist Wasserstoff, Methyl, Ethyl, Methoxy oder Ethoxy, vorzugsweise Wasserstoff;
- R³: ist Wasserstoff, Methyl, Ethyl, Methoxy, Ethoxy oder Sulfo, vorzugsweise Methoxy und Wasserstoff und insbesondere Wasserstoff;
- R⁴: ist Wasserstoff, Methyl, Ethyl, Methoxy oder Ethoxy, vorzugsweise Wasserstoff;
- R⁵: ist Wasserstoff, Methyl, Ethyl, Methoxy, Ethoxy oder Sulfo, vorzugsweise Methoxy und Wasserstoff und insbesondere Wasserstoff;
- R⁶: ist Wasserstoff, Methyl, Ethyl, Methoxy oder Ethoxy, vorzugsweise Wasserstoff;
- Y: ist jedes, unabhängiges voneinander, Vinyl, β-Chlorethyl, β-Thiosulfatoethyl oder β-Sulfatoethyl;
- R: steht in 3- oder 4-Stellung am 6-Sulfo-8-hydroxy-naphth-7-yl-Rest und ist Wasserstoff oder Sulfo;
- X: ist Chlor oder Hydroxy, bevorzugt Hydroxy;
- Z: ist Chlor oder Hydroxy, bevorzugt Hydroxy;
die Triazinylamino-Gruppe in Formel (2) steht im Falle von R gleich Wasserstoff in 2- oder 3-Stellung an den 6-Sulfo-8-hydroxy-naphth-7-yl-Rest, im Falle von R gleich 4-Sulfo in 1-oder 3-Stellung an den 6-Sulfo-8-hydroxy-naphth-7-yl-Rest und im Falle von R gleich 3-Sulfo in 1-Stellung an den 6-Sulfo-8-hydroxy-napth-7-yl-Rest gebunden;
im Falle von X und Z gleich beide Chlor ist zwingend mindestens ein weiterer Farbstoff der Formel (2) mit X oder Z gleich Hydroxy in der Mischung enthalten.

Von den erfindungsgemäßen Mischungen sind solche als bevorzugt zu nennen mit einem Farbstoff der allgemeinen Formel (2), in welcher R gleich Wasserstoff ist und die Triazinylamino-Gruppe in 3-Stellung an den 6-Sulfo-8-hydroxy-naphthalin-Rest gebunden ist.

Die erfindungsgemäßen Farbstoffmischungen der Farbstoffe der Formeln (1) und (2) können erfindungsgemäß gegebenenfalls zusätzlich einen oder zwei Monoazofarbstoffe der allgemeinen Formel (3), gegebenenfalls einen oder mehrere, wie 2 oder 3, Monoazofarbstoffe der allgemeinen Formel (4) und gegebenenfalls einen oder mehrere, wie 2 oder 3, Monoazofarbstoffe der allgemeinen Formel (5) 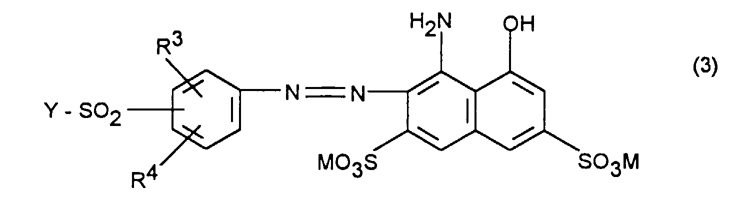 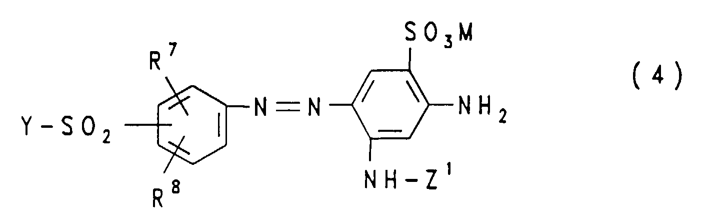 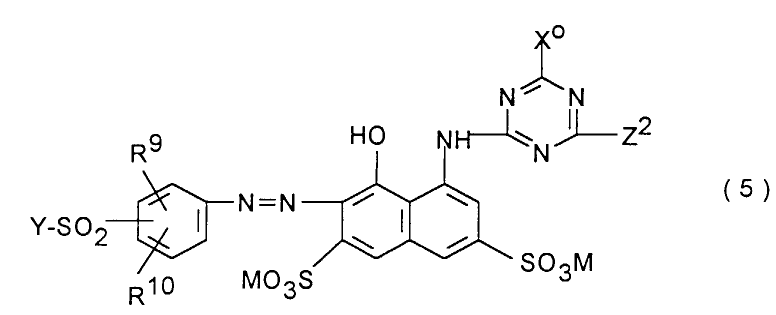 enthalten, in welchen bedeuten:
- R³, R⁴, M und Y: haben eine der obengenannten Bedeutungen;
- R⁷: ist Wasserstoff, Methyl, Ethyl, Methoxy oder Ethoxy, vorzugsweise Methoxy und Wasserstoff und insbesondere Wasserstoff;
- R⁸: ist Wasserstoff, Methyl, Ethyl, Methoxy oder Ethoxy, vorzugsweise Wasserstoff;
- R⁹: ist Wasserstoff, Methyl, Ethyl, Methoxy oder Ethoxy, vorzugsweise Methoxy und Wasserstoff und insbesondere Wasserstoff;
- R¹⁰: ist Wasserstoff, Methyl, Ethyl, Methoxy oder Ethoxy, vorzugsweise Wasserstoff;
- Z¹: ist Alkanoyl von 2 bis 5 C-Atomen, wie Propionyl und Acetyl, oder ist Benzoyl oder 2,4-Dichlor-1,3,5-triazin-6-yl oder ist eine Gruppe der allgemeinen Formel (a) 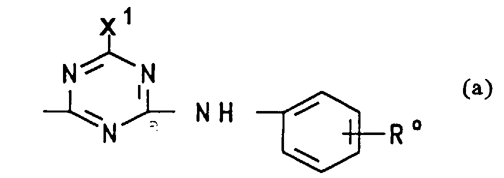 in welcher
X¹ Chlor, Fluor oder Cyanoamino ist und
R^{o} Sulfo, Carboxy oder eine Gruppe der allgemeinen Formel -SO₂-Y mit Y einer der obengenannten Bedeutungen ist, und
- Z¹: ist bevorzugt Acetyl oder eine Gruppe der Formel (a);
- X^{o}: ist Chlor, Fluor oder Hydroxy;
- Z²: ist Chlor, Morpholino oder eine Gruppe der Formel (b) 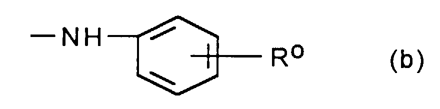 mit R^{o} einer der obengenannten Bedeutungen.

Sowohl in den obengenannten allgemeinen Formeln als auch in den nachfolgend angegebenen allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Eine Sulfogruppe ist eine Gruppe der allgemeinen Formel -SO₃M , eine Carboxygruppe eine Gruppe der allgemeinen Formel -COOM , eine Sulfatogruppe eine Gruppe der allgemeinen Formel -OSO₃M und eine Thiosulfatogruppe eine Gruppe der allgemeinen Formel -S-SO₃M , jeweils mit M der oben angegebenen Bedeutung.

Bevorzugt von den Farbstoffen der allgemeinen Formel (2) sind diejenigen, die der allgemeinen Formel (2A) 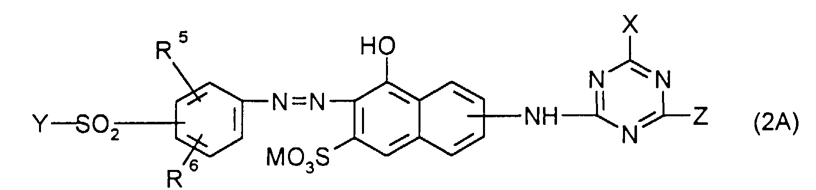 entsprechen, in welcher M, Y, R⁵, R⁶, X und Z die oben genannten, insbesondere bevorzugten, Bedeutungen haben und die Triazinylamino-Gruppe in 2- oder bevorzugt in 3-Stellung an den 6-Sulfo-8-hydroxy-naphth-7-yl-Rest gebunden ist.

Die Farbstoffe der allgemeinen Formel (2), in welcher X und Z beide Hydroxy sind, sind neu und ebenfalls Gegenstand der Erfindung.

Diese neuen Verbindungen der allgemeinen Formeln (3A) und (3B) 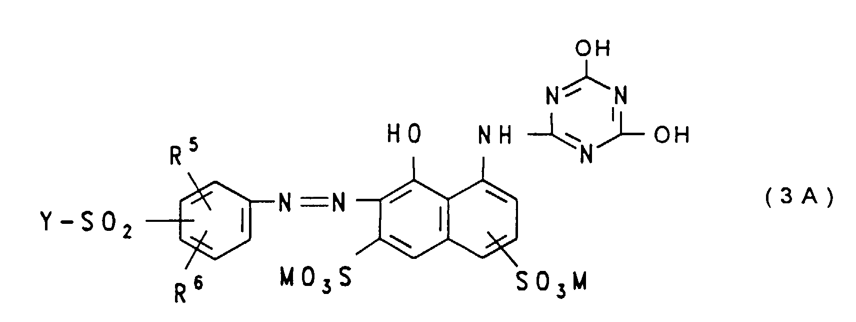 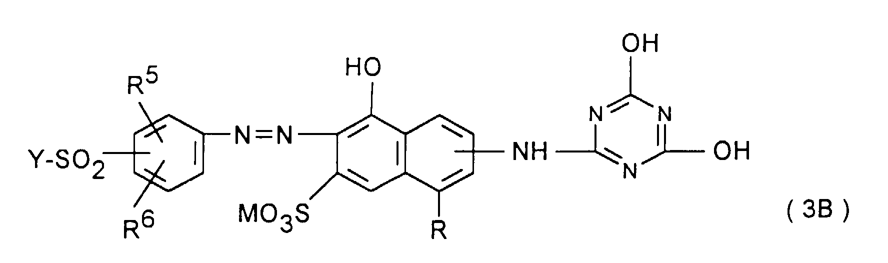 in welchen M, Y, R⁵ und R⁶ die obengenannten Bedeutungen haben, die eine Gruppe -SO₃M in Formel (3A) in meta- oder para-Stellung zur Triazinylamino-Gruppe gebunden steht und die Triazinylamino-Gruppe in Formel (3B) im Falle von R gleich Wasserstoff in 2- oder 3-Stellung an den 6-Sulfo-8-hydroxynaphth-7-yl-Rest und im Falle von R gleich Sulfo in 3-Stellung an den 6-Sulfo-8-hydroxy-naphth-7-yl-Rest gebunden ist, können erfindungsgemäß hergestellt werden, indem man auf eine Verbindung der allgemeinen Formel (3a) bzw. (3b) 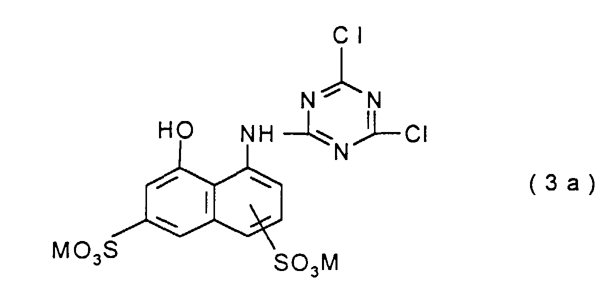 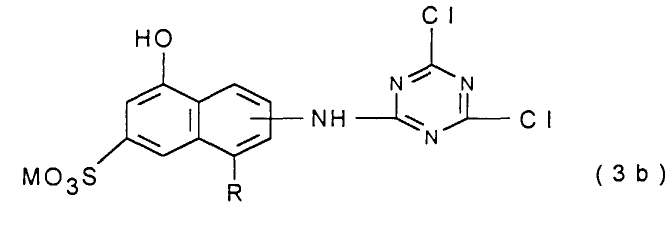 in welchen M die obengenannte Bedeutung besitzt, in Formel (3b) im Falle von R gleich Wasserstoff die Dichlor-triazinylamino-Gruppe in 2- oder 3-Stellung an den 6-Sulfo-8-hydroxy-naphth-7-yl-Rest und im Falle von R gleich Sulfo in 3-Stellung an den 6-Sulfo-8-hydroxy-naphth-7-yl-Rest gebunden ist, in wäßrigem Medium bei einer Temperatur zwischen 40 und 80°C und bei einem pH-Wert zwischen 10 und 13 Hydroxylionen einwirken läßt oder die Hydrolyse bei einer Temperatur zwischen 70 und 100°C und einem pH-Wert zwischen 2 und 5 durchführt. Die so erhaltene Lösung mit einer Verbindung der allgemeinen Formel (4b) bzw. (5b) oder einem Gemisch von Verbindungen der allgemeinen Formeln (4a) und (4b) bzw. (5a) und (5b) 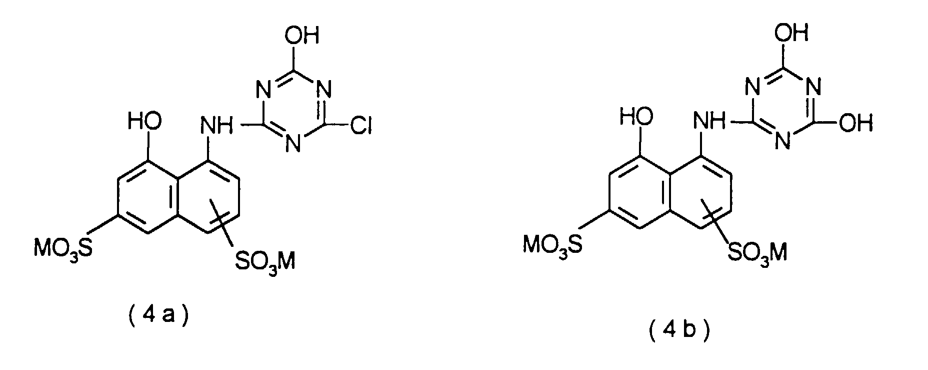 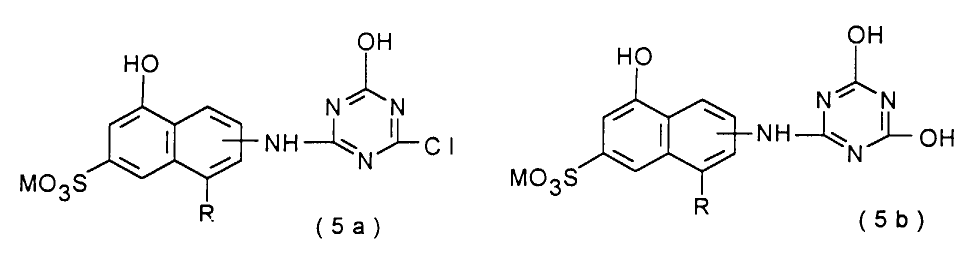 in welchen M die obengenannte Bedeutung besitzt und in Formeln (5a) und (5b) die Hydroxy-chlor-triazinylamino- bzw. Dihydroxy-triazinylamino-Gruppe im Falle von R gleich Wasserstoff in 2- oder 3-Stellung an den 6-Sulfo-8-hydroxynaphth-7-yl-Rest und im Falle von R gleich Sulfo in 3-Stellung an den 6-Sulfo-8-hydroxy-naphth-7-yl-Rest gebunden ist, wird sodann auf einen pH-Wert zwischen 5 und 7 gestellt und die Verbindungen der allgemeinen Formeln (4a) und (4b) bzw. die Verbindungen der allgemeinen Formeln (5a) und (5b) bei einer Temperatur zwischen 5°C und 35°C und bei einem pH-Wert zwischen 4 und 7 in üblicher Weise mit dem Diazoniumsalz einer Aminoverbindung der allgemeinen Formel (6) 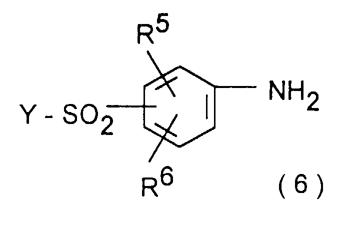 in welcher Y, R⁵ und R⁶ eine der obengenannten Bedeutungen haben, gekuppelt.

Die Zwischenprodukte der allgemeinen Formeln (4a) und (4b) bzw. der Formeln (5a) und (5b) werden bei der Hydrolyserreaktion im alkalischen Bereich in einem molaren Mischungsverhältnis zwischen etwa 70:30 und 0:100 erhalten. Das Mischungsverhältnis ist abhängig von den Hydrolysebedingungen, wobei bei Erhöhung der Reaktionstemperatur (bevorzugt zwischen 60 und 80°C) und ebenso bei Erhöhung des pH-Wertes (bevorzugt bei einem pH-Wert zwischen 12 und 13) der Anteil an den Dihydroxy-triazinylamino-Verbindungen deutlich erhöht wird bzw. vollständig gebildet wird.

Die anderen Farbstoffe entsprechend den allgemeinen Formeln (1) bis (5) sind in der Regel allgemein bekannt, beispielsweise aus den deutschen Patentschriften Nrs. 960 534 und 965 902 und der US-Patentschrift Nr. 4 257 770, den europäischen Patentschriften Nrs. 0 032 187, 0 094 055, 0 073 481 und 0 061 151, oder können, sofern der eine oder andere in der Literatur noch nicht spezifisch beschrieben wurde, analog den dort beschriebenen Verfahrensweisen hergestellt werden.

Die Gruppen Y-SO₂- stehen bevorzugt in meta- und insbesondere bevorzugt in para-Stellung zu den Azogruppen bzw. Aminogruppen an den Benzolrest gebunden. Bevorzugt ist Y-SO₂- Vinylsulfonyl und insbesondere bevorzugt β-Sulfatoethylsulfonyl.

Im allgemeinen liegen die Azofarbstoffe der allgemeinen Formeln (1) und (2) in den erfindungsgemäßen Mischungen in einem molaren Mischungsverhältnis zwischen 97 : 3 und 60 : 40, bevorzugt zwischen 90 : 10 und 65 : 35, insbesondere zwischen 85 : 15 und 68 : 32, vor. Sind in diesen erfindungsgemäßen Farbstoffmischungen auch Farbstoffe der allgemeinen Formeln (3), (4) oder (5) oder eine Kombination dieser Farbstoffe enthalten, so sind die Farbstoffe der allgemeinen Formel (3) in der Regel in der Mischung zu bis zu 8 Mol-%, bezogen auf die Gesamtmenge der Farbstoffe (1) und (2), die Farbstoffe der allgemeinen Formel (4) in der Regel bis zu 35 Mol-% und die Farbstoffe der allgemeinen Formel (5) in der Regel bis zu 15 Mol-%, ebenso jeweils bezogen auf die Gesamtmenge der Farbstoffe (1) und (2), enthalten.

Sind in den erfindungsgemäßen Farbstoffmischungen zwei oder mehrere Farbstoffe entsprechend der allgemeinen Formel (2) enthalten, bei welchen X gleich Chlor oder Hydroxy und Z gleich Chlor oder Hydroxy ist, so liegen der oder die Farbstoffe mit X und Z beide gleich Chlor, der oder die Farbstoffe mit X gleich Chlor und Z gleich Hydroxy und der oder die Farbstoffe mit X und Z beide Hydroxy bevorzugt zueinander in einem molaren Mischungsverhältnis zwischen 20 : 60 : 20 bis 0 : 0 : 100, bevorzugt 10 : 20 : 70 bis 0 : 5 : 95, vor.

Besonders bevorzugt sind Mischungen von Farbstoffen der allgemeinen Formeln (11), (12A) und (12B) 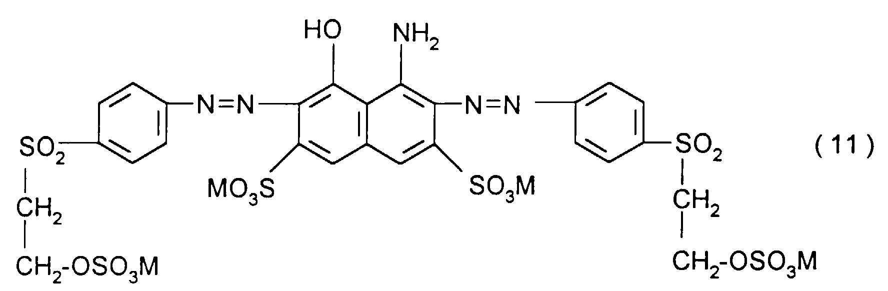 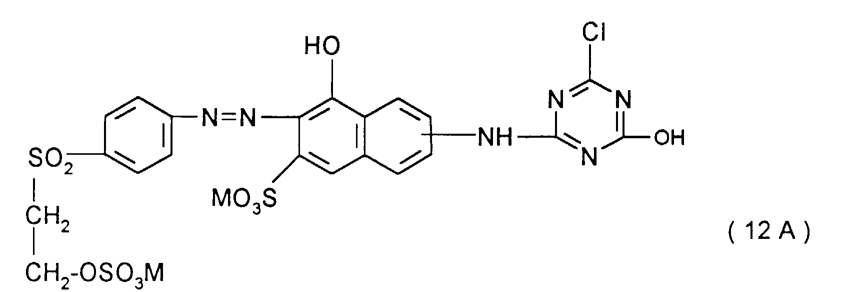 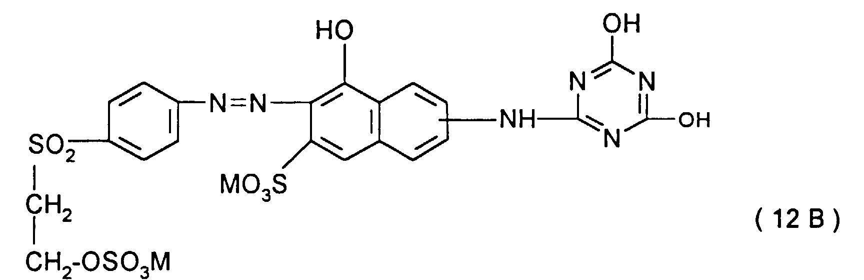 in welchen M die obengenannte Bedeutung hat und in den Formeln (12A) und (12B) die Triazinylamino-Gruppe in 2- oder bevorzugt in 3-Stellung an den 6-Sulfo-8-hydroxy-naphth-7-yl-Rest gebunden ist, wobei das molare Mischungsverhältnis der Farbstoffe (11) : (12A) : (12B) zwischen 97 : 0 : 3 und 60 : 8 : 32 liegt. Bevorzugt sind weiterhin Mischungen aus Farbstoffen der allgemeinen Formeln (11), (12A), (12B), (12C) und (12D) 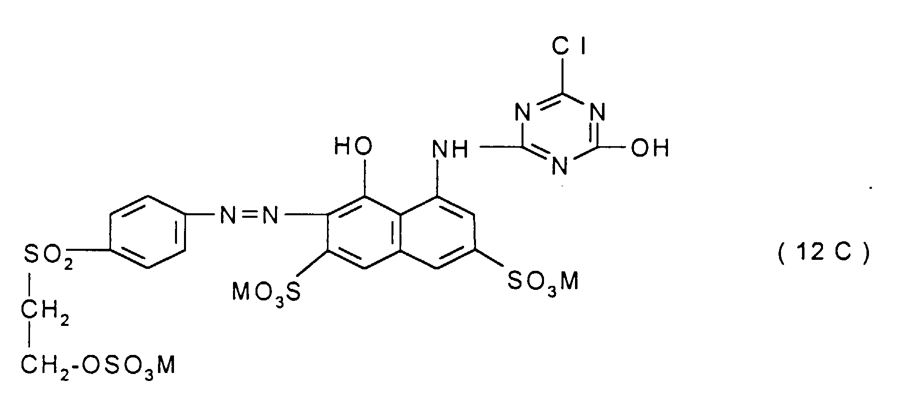 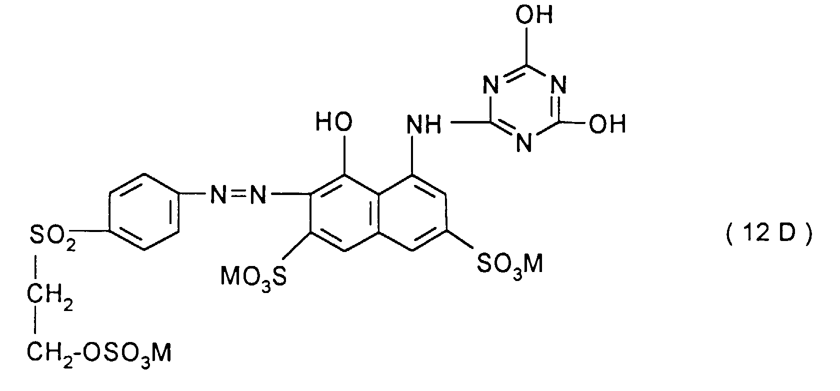 mit M der obengenannten Bedeutung, in welchen das Mischungsverhältnis der Farbstoffe (11) : (12A) : (12B) : (12C) : (12D) zwischen 97 : 0 : 3 : 0: 3 und 60 : 5 : 25 : 3 : 7 liegt.

Bevorzugt sind ebenfalls Mischungen von Farbstoffen (11) und Farbstoffen (12C) und (12D), in welchen das molare Mischungsverhältnis der Farbstoffe (11) : (12C) : (12D) zwischen 97 : 3 : 0 und 60 : 8 : 32 liegt.

Reste von Diazokomponenten in den allgemeinen Formeln (1) bis (5) sowie Reste der allgemeinen Formel R°-phenyl in den allgemeinen Formeln (a) und (b) sind beispielsweise 3-(β-Sulfatoethylsulfonyl)-phenyl, 4-(β-Sulfatoethylsulfonyl)-phenyl, 2-Methyl-5-methoxy-4-(β-sulfatoethylsulfonyl)-phenyl, 2-Methoxy-5-(β-sulfatoethylsulfonyl)-phenyl und 2,5-Dimethoxy-4-(β-sulfatoethylsulfonyl)-phenyl sowie deren Vinylsulfonyl-, β-Chlorethylsulfonyl- und β-Thiosulfatoethylsulfonyl-Derivate sowie 3-Sulfo-phenyl und 4-Sulfophenyl, hiervon bevorzugt 2-Methoxy-5-(β-sulfatoethylsulfonyl)-phenyl und 2,5-Dimethoxy-4-(β-sulfatoethylsulfonyl)-phenyl und insbesondere 3-(β-Sulfatoethylsulfonyl)-phenyl und 4-(β-Sulfatoethylsulfonyl)-phenyl bzw. 3-Sulfophenyl.

Die Farbstoffe der Formeln (1) bis (5) können, insbesondere bei gleichem Chromophor, innerhalb der Bedeutung von Y unterschiedliche faserreaktive Gruppen -SO₂-Y besitzen. Insbesondere können die Farbstoffmischungen Farbstoffe gleichen Chromophors enthalten, in denen die faserreaktiven Gruppen -SO₂-Y zum einen Vinylsulfonylgruppen und zum anderen β-Chlorethylsulfonyl- oder β-Thiosulfatoethylsulfonyl- oder bevorzugt β-Sulfatoethylsulfonyl-Gruppen sind. Enthalten die Farbstoffgemische die jeweiligen Farbstoffkomponenten in Form eines Vinylsulfonyl-Farbstoffes, so liegt der Anteil des jeweiligen Vinylsulfonylfarbstoffes zu dem jeweiligen β-Chlor- oder β-Thiosulfato- oder β-Sulfatoethylsulfonyl-Farbstoff bevorzugt bei bis zu etwa 10 Mol-%, bezogen auf den jeweiligen Farbstoffchromophor.

Hierbei sind solche Farbstoffmischungen bevorzugt, bei welchen der Anteil an den Vinylsulfonyl-Farbstoffen zu den β-Sulfatoethylsulfonyl-Farbstoffen im Molverhältnis zwischen 2:98 und 10:90 liegt.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, geringe Mengen an Sikkativen oder die Löslichkeit verbessernde Mittel, wie die bekannten Naphthalinsulfonsäure-FormaldehydKondensationsprodukte, oder, falls sie in flüssiger, wäßriger Lösung (einschließlich des Gehaltes von Verdickungsmitteln, wie sie bei Druckpasten üblich sind) vorliegen, können sie die genannten Substanzen (außer den Sikkativen) ebenfalls gelöst enthalten und ebenso Substanzen, die die Haltbarkeit dieser Präparationen gewährleisten, wie beispielsweise schimmelverhütende Mittel.

Im allgemeinen liegen die erfindungsgemäßen Farbstoffmischungen als elektrolytsalzhaltige Farbstoffpulver oder -granulate (letztere sollen im nachfolgenden Text mit den Termini "pulver/pulvrig" eingeschlossen sein) mit einem Gesamtfarbstoffgehalt von 20 bis 70 Gew.-%, bezogen auf das Farbstoffpulver bzw. die Präparation, vor. Diese Farbstoffpulver/Präparationen können zudem die erwähnten Puffersubstanzen in einer Gesamtmenge von bis zu 5 Gew.-%, bezogen auf das Farbstoffpulver, enthalten. Sofern die erfindungsgemäßen Farbstoffmischungen in wäßriger Lösung vorliegen, beträgt der Gesamtfarbstoffgehalt in diesen wäßrigen Lösungen bis zu etwa 50 Gew.-%, wie beispielsweise zwischen 5 und 40 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten. Sowohl die wäßrigen als auch pulverigen Präparationen können ein übliches Hilfsmittel enthalten.

Die erfindungsgemäßen Farbstoffmischungen können in üblicher Weise hergestellt werden, so durch mechanisches Mischen der einzelnen Farbstoffe oder von Mischungen von 2 oder 3 solcher Einzelfarbstoffe mit den anderen Einzelfarbstoffen in Form von deren Farbstoffpulver oder wäßrigen Lösungen. Werden die erfindungsgemäßen Farbstoffmischungen durch mechanisches Mischen der Einzelfarbstoffe hergestellt, so werden beim Mischen eventuell erforderliche Stellmittel, Entstaubungsmittel oder weitere Hilfsmittel, die in der Färbereitechnik üblich und in den hierzu verwendeten Farbstoffpräparationen üblich sind, zugegeben.

Geht man von wäßrigen Farbstofflösungen der Einzelkomponenten (Einzelfarbstoffe) oder gegebenenfalls von Farbstofflösungen, die bereits zwei oder mehrere dieser Einzelkomponenten enthalten, aus, so gelangt man ebenfalls durch einfaches Vermischen unter Berücksichtigung der Mengen der Farbstofflösungen und deren Farbstoffkonzentrationen zu der gewünschten Farbstoffmischung in wäßriger Form (Flüssigpräparation). Solche wäßrigen Farbstofflösungen der Einzelkomponenten oder Mischungen solcher Einzelkomponenten können auch Syntheselösungen sein, die aus der Synthese der Einzelkomponenten oder, sofern es die Synthese zuläßt, aus der Synthese von Mischungen von Einzelfarbstoffen erhältlich sind. Die so durch Mischung der einzelnen Farbstofflösungen (Syntheselösungen) erhaltenen wäßrigen Lösungen mit den erfindungsgemäßen Farbstoffmischungen können dann direkt, gegebenenfalls nach Filtration, Aufkonzentrieren und/oder Zusatz eines Puffers oder anderer Hilfsstoffe, als Flüssigpräparation der färberischen Verwendung zugeführt werden. In diesen Flüssigpräparationen liegt der Gesamtfarbstoffgehalt in der Regel zwischen 10 und 50 Gewichtsprozent, bevorzugt zwischen 15 und 40 Gewichtsprozent. Aus ihnen lassen sich die erfindungsgemäßen pulver- oder granulatförmigen Farbstoffmischungen der gewünschten Zusammensetzung und Einstellung ebenfalls, beispielsweise durch Sprühtrocknung und erforderlichenfalls in einem Wirbelbett, gewinnen.

Die erfindungsgemäßen wäßrigen Farbstofflösungen mit den erfindungsgemäßen Farbstoffmischungen können jedoch zur Einstellung von gewünschten Farbstoffmischungsverhältnissen und Farbtonnuancen insbesondere vorteilhaft in der Weise erfindungsgemäß miteinander vermischt werden, daß man während der Zugabe der Komponenten (der Farbstofflösungen) den Farbton der Mischung mit einer ATR-Sonde steuert. Hierbei bedient man sich der Multikomponentenanalyse mit Hilfe von UV/VIS-Spektren. Man ermittelt hiermit zunächst die genauen Mengen und Farbstoffkonzentrationen der in den wäßrigen Ausgangslösungen enthaltenen Einzelkomponenten (Einzelfarbstoffe), die dann unter Kontrolle eines Steuerungsverfahrens mittels einer ATR-Sonde in den erforderlichen Mengen miteinander vermischt werden. Die Verfahrensweise basiert auf der Aufzeichnung von UV/VIS-Spektren mit Hilfe eines Photodioden-Spektrometers (s. hierzu auch EP-A-0 385 587) oder eines schnellscannenden Gitterspektrometers mit anschließender Multikomponenten-Analyse, die, nach Eichung mit den reinen Einzelfarbstoffen oder Mischungen solcher Farbstoffe bzw. deren wäßrigen Lösungen, unter mathematischer Zerlegung in die Einzelkomponenten genaue Angaben über die Farbstoffmengen und -konzentrationen in den Lösungen liefert. Zu jedem Zeitpunkt kann über einen Monitor der aktuelle Gehalt der Farbstoffe abgelesen werden. Durch eine hohe Auflösung des Meßgerätes können auch kleinste Absorptions-Schultern erfaßt werden, die zur genauen Abgrenzung der Farbstoffe untereinander dienen.

Es hat sich bewährt, vor Meßbeginn Eichreihen der zu bestimmenden Farbstoffe zu vermessen. Die Eichmessungen können nun sowohl Einzelkomponenten als auch Mischungen mehrerer Komponenten enthalten. Die genauen Konzentrationen werden in das Computerprogramm, getrennt nach Farbstoff, eingegeben. Der Konzentrationsbereich der Eichlösungen sollte den Meßbereich beinhalten. Aus diesen Angaben wird eine Kalibriermatrix errechnet, die zur späteren Bestimmung der Farbstoffkomponenten erforderlich ist. Unter der hier eingesetzten Multikomponenten-Analyse wird die quantitative Analytik von Farbstoffgemischen verstanden, die sich folgender mathematischer Algorithmen bedient: Partial Least Squares Type 1 (PLS-1), Partial Least Squares Type 2 (PLS-2) - Methoden der kleinsten Fehlerquadrate, Principal Component Regression Analysis (PCR) sowie Classic Least Squares (CLS) oder Inverse Least Squares (ILS). Die Methode der kleinsten Fehlerquadrate (PLS) sowie die Hauptkomponenten-Regression (PCR) werden bspw. in Anal. Chem. 1988, 60, 1193, Anal. Chem. 1988, 60, 1202 und Anal. Chem. 1990, 62, 1091 von D. Haaland und E. V. Thomas sowie in A. Tutorial, Laboratory for Chemometrics and Center for Process Analytical Chemistry, Dept. of Chemistry, University of Washington, Seattle, WA 98195, von P. Geladi und B. Kowalewski beschrieben. Das Ziel dieser rechnerischen Ansätze ist, mathematische Gleichungen zu erhalten, durch die der Gehalt der unbekannten Mischungen bestimmt werden kann. Das Prinzip des PLS-Algorithmus ist es, die erhältlichen Spektren in eine Reihe mathematischer Spektren zu zerlegen, die als Faktoren beschrieben werden. Eine detaillierte Beschreibung der Vorgehensweise ist aus der angegebenen Literatur erhältlich.

Über einen Zulauf und einen Ablauf werden die einzelnen Farbstofflösungen durch eine Durchflußküvette gepumpt. Der Küvettendurchmesser kann bis zu 0,01 cm klein sein, um auch hochkonzentrierte Lösungen messen zu können. Die Küvette befindet sich in einem UV/VIS-Spektrometer, das entweder ein Diodenzeilen-Spektrometer oder ein schnellscannendes Gitter-Spektrometer ist. Farbstofflösungen von Einzelkomponenten (Einzelfarbstoffen) können direkt spektroskopisch vermessen werden. Bei Farbstoffmischungen, die direkt, ohne aufbereitenden Zwischenschritt, analysierbar sind, kann die ATR-Meßtechnik (Attenuated Total Reflection) eingesetzt werden. Bei dieser Technik wird ein Quarz- oder Alkalimetallglasstab oder eine hierfür geeignete lichttransportierende Vorrichtung in die zu messende Lösung getaucht und an der Grenzfläche zwischen Kristall und Flüssigkeit gemessen. Die hierfür üblicherweise eingesetzten Proben haben eine Konzentration von 5 bis 150 g/l Farbstoff. Die ATR-Sonde ist über einen Glasfaserlichtleiter mit dem Spektrometer verbunden. Die Länge des Lichtleiters kann bei Messungen im VIS-Bereich bis zu 1000 m betragen, weswegen das Spektrometer zentral in einer Meßwarte untergebracht werden kann. Bei explosionsgeschützten Betrieben muß so keine weitere Vorsorge getroffen werden.

Um eine erfindungsgemäße wäßrige Lösung der Farbstoffmischung mit einem bestimmten Farbstoffgehalt und einer bestimmten Farbstoffzusammensetzung der Mischung einstellen zu können, muß die Zielmischung eingemessen und ihre Farbkoordinaten und prozentuale Zusammensetzung ermittelt werden. Diese Daten dienen während der Einstellung bzw. Dosierung der Einzelkomponenten als Zielgröße, gegen die die Farbdifferenz und die Einzelkonzentrationen berechnet und graphisch dargestellt werden. Eine Zugabe der hierzu erforderlichen Farbstoffe als Komponenten der Mischung zu einem bereits vorgelegten Farbstoff der erfindungsgemäßen Mischung, wie beispielsweise der mengemäßigen Hauptkomponente entsprechend den Farbstoffen der allgemeinen Formel (1), erfolgt nun so lange, bis die Zielkonzentrationen sowie der Zielfarbton erreicht sind.

Alternativ kann man auch von Mischungen der den Farbstoffen zugrundeliegenden Kupplungskomponenten ausgehen, die man mit dem Diazoniumsalz eines entsprechenden Amins der allgemeinen Formel (10) 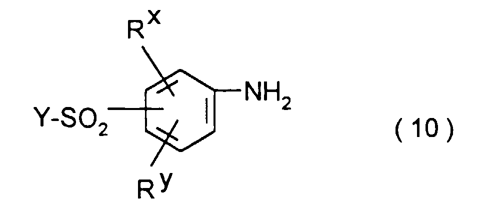 in welcher Y eine der obengenannten Bedeutungen besitzt und R^{x} eine der Bedeutungen von R¹ und R^{y} eine der Bedeutungen von R² hat, versetzt und in üblicher Weise mit dieser Diazokomponente bei einer Temperatur zwischen 0 und 35°C und einem pH-Wert zwischen 4 und 7 kuppelt. Man erhält auf diese Art und Weise die erfindungsgemäßen Mischungen der Farbstoffe (1) bis (5), in welchen die Formelreste R¹, R³, R⁵ und R⁹ die gleiche Bedeutung von R^{x} haben und R², R⁴, R⁶, R⁸ und R¹⁰ die gleiche Bedeutung von R^{y} besitzen.

Die erfindungsgemäßen Farbstoffmischungen liefern nach den in der Technik für faserreaktive Farbstoffe zahlreich beschriebenen Anwendungs- und Fixierverfahren auf hydroxy- und/oder carbonamidgruppenhaltigen Fasermaterialien tiefschwarze Färbungen mit gutem Farbaufbau, guter Ätzbarkeit und insbesondere guter Auswaschbarkeit nicht fixierter Farbstoffanteile aus den gefärbten Materialien.

Gegenstand der vorliegenden Erfindung ist somit auch die Verwendung der erfindungsgemäßen Farbstoffmischungen zum Färben (einschließlich Bedrucken) von hydroxy- und/oder carbonamidgruppenhaltigen Fasermaterialien bzw. Verfahren zum Färben solcher Fasermaterialien unter Verwendung einer erfindungsgemäßen Farbstoffmischung, indem man die Farbstoffmischung in gelöster Form auf das Substrat appliziert und die Farbstoffe durch Einwirkung eines alkalisch wirkenden Agens oder durch Hitze oder durch beide Maßnahmen auf der Faser fixiert.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Anwendung der erfindungsgemäßen Farbstoffmischungen erfolgt nach allgemein bekannten Verfahren zum Färben und Bedrucken von Fasermaterialien gemäß den bekannten Anwendungstechniken für faserreaktive Farbstoffe. Da die Farbstoffe der erfindungsgemäßen Farbstoffmischungen zueinander ein sehr gutes Kombinationsverhalten zeigen, können die erfindungsgemäßen Farbstoffmischungen auch mit Vorteil in den Ausziehfärbeverfahren und ebenso in den üblichen Foulard-Färbeverfahren, wie Klotz-Kurz-Verweilverfahren und Kontinueverfahren, eingesetzt werden. Demgemäß erhält man mit ihnen beispielsweise auf Cellulosefasern nach den Ausziehverfahren aus langer Flotte bei Temperaturen zwischen 40 und 105°C, gegebenenfalls bei Temperaturen bis zu 130°C unter Druck, und gegebenenfalls in Gegenwart von üblichen Färbereihilfsmitteln unter Verwendung eines alkalisch wirkenden Mittels und gegebenenfalls neutralen Salzen, wie Natriumchlorid oder Natriumsulfat, Färbungen in sehr guten Farbausbeuten und mit ausgezeichnetem Farbaufbau und gleicher Nuance. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.
Im Foulard-Färbeverfahren wird die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, wie durch IR-Bestrahlung, Heißluft oder Heißdampf, fixiert, wobei diese Verfahrensweise kontinuierlich geführt werden kann. Beim sogenannten Klotz-Kaltverweil-Verfahren wird der Farbstoff zusammen mit dem Alkali mittels dem Foulard auf das Gewebe aufgebracht und danach durch mehrstündiges Lagern bei Raumtemperatur oder leicht erhöhter Temperatur fixiert.

Ebenfalls erhält man nach den üblichen Druckverfahren für Cellulosefasern - die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffmischungen erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Nach dem Fixieren werden die Färbungen oder Drucke mit kaltem und heißem Wasser, gegebenenfalls unter Zusatz eines üblichen Hilfsmittels und eines alkalibindenden Mittels, wie Essigsäure, gründlich gespült. Diese Färbeverfahren sind zahlreich in der allgemeinen Fachliteratur wie auch in der Patentliteratur beschrieben.

Die alkalisch wirkenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe der erfindungsgemäßen Farbstoffmischungen mit einem alkalisch wirkenden Mittel, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

In den Beispielen sind die Formeln der Farbstoffe in Form der freien Säure angegeben; die Mengenteile beziehen sich auf die saure Form. In der Regel werden die Farbstoffe jedoch in der für wasserlösliche Farbstoffe üblich vorliegenden Form als elektrolytsalzhaltiges (beispielsweise natriumchlorid-und natriumsulfathaltiges) Alkalimetallsalz-Pulver eingesetzt. Die angegebenen Mengen sind beispielhaft zu verstehen und limitieren nicht die mögliche Einstellung unterschiedlicher Nuancen.

### Beispiel 1

50 Teile einer wäßrigen Lösung, wie bspw. einer aus der Synthese erhältlichen wäßrigen Lösung, mit 14 Teilen (= 14,12 mMol) des marineblaufärbenden Disazofarbstoffes der Formel (A) 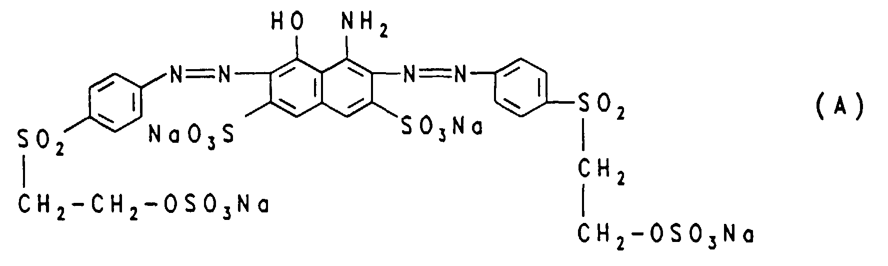 und 1 Teil (= 1,48 mMol) des rotfärbenden Monoazofarbstoffes der Formel (B) 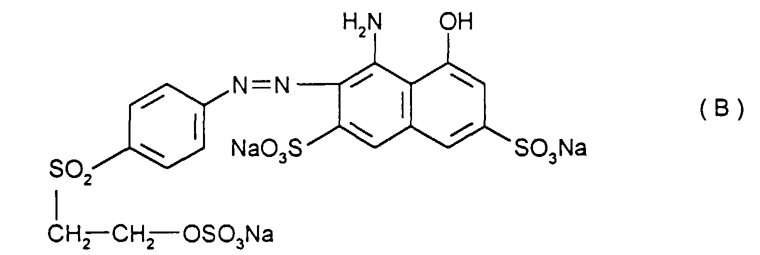 10 Teile einer wäßrigen Lösung, wie bspw. einer aus der Synthese erhältlichen wäßrigen Lösung, mit 2 Teilen (= 2,80 mMol) des roten Monoazofarbstoffes der Formel (C) 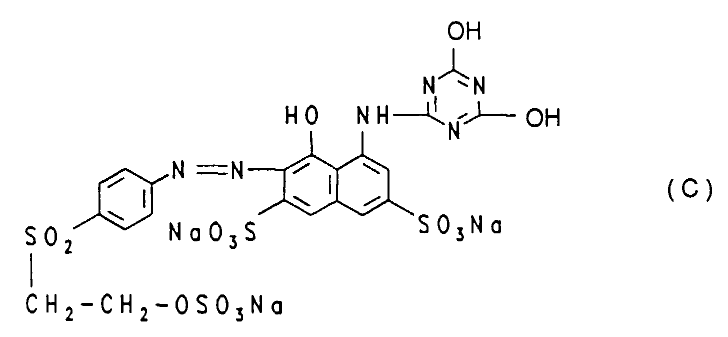 15 Teile einer wäßrigen Lösung, wie bspw. einer aus der Synthese erhältlichen wäßrigen Lösung, mit 2,15 Teilen (= 3,8 mMol) des goldgelbfärbenden Monoazofarbstoffes der Formel (D) 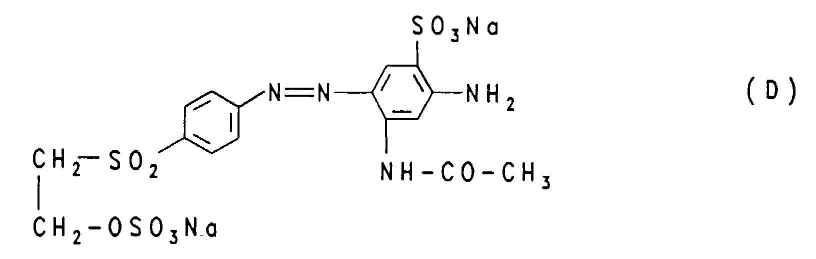 und 25 Teile einer wäßrigen Lösung, wie bspw. einer aus der Synthese erhältlichen wäßrigen Lösung, mit 2,5 Teilen (= 3,64 mMol) des organgefärbenden Farbstoffes der Formel (E) 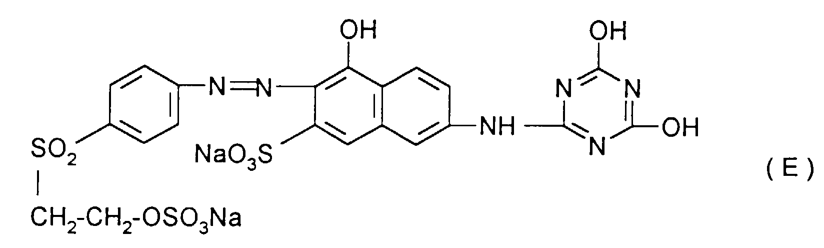 (wobei diese Lösungen noch Elektrolytsalze, wie Natriumchlorid, oder übliche Hilfsmittel, wie bspw. Puffer und tensidische Stoffe, enthalten können bzw. enthalten) werden miteinander vermischt.

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden und liefert nach den in der Technik für faserreaktive Farbstoffe üblichen Applikations-und Fixierverfahren beispielsweise auf Cellulosefasermaterialien Färbungen und Drucke mit guter Auswaschbarkeit nicht fixierter Farbstoffanteile und guter Naßliegeechtheit in einem tiefen Schwarz, das zwischen Tageslicht und abendlichem Licht nicht nuanciert.

### Beispiel 2

50 Teile einer wäßrigen Lösung, wie bspw. einer aus der Synthese erhältlichen wäßrigen Lösung, mit 14 Teilen des marineblaufärbenden Disazofarbstoffes der Formel (A) und 1 Teil des rotfärbenden Monoazofarbstoffes der Formel (B), 10 Teile einer wäßrigen Lösung, wie bspw. einer aus der Synthese erhältlichen wäßrigen Lösung, mit 4 Teilen des roten Monoazofarbstoffes der Formel (C) und 33,8 Teile einer wäßrigen Lösung, wie bspw. einer aus der Synthese erhältlichen wäßrigen Lösung, mit 4,83 Teilen des goldgelbfärbenden Monoazofarbstoffes der Formel (D) (wobei diese Lösungen noch Elektrolytsalze, wie Natriumchlorid, oder übliche Hilfsmittel, wie bspw. Puffer und tensidische Stoffe, enthalten können bzw. enthalten) werden mittels dem in dem allgemeinen Beschreibungsteil erläuterten Analysensystem und mittels der daraus resultierenden Steuerung von die Farbstofflösungen dosierenden Pumpen miteinander vermischt. Als Zielgrößen dienen hierfür der Farbort und die Einzelfarbstoffkonzentrationen einer auf konventionelle Art und Weise erstellten Farbstoffmischung gemäß vorliegender Erfindung, die von dem Koloristen als gewünschte Farbstoffmischung definiert wurde. Während der Zugabe der Farbstoffe (C) und (D) zu der Farbstofflösung der Farbstoffe (A) und (B) wird auf dem Monitor jederzeit die Farbdifferenz und die Konzentration der Einzelfarbstoffe der momentan vorliegenden Mischung protokolliert. Bei Erreichen der Zielvorgabe wird die Zugabe der Farbstofflösungen gestoppt.

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden. Sie liefert nach den in der Technik für faserreaktive Farbstoffe üblichen Applikations-und Fixierverfahren beispielsweise auf Cellulosefasermaterialien Färbungen und Drucke mit guter Auswaschbarkeit nicht fixierter Farbstoffanteile und guter Naßliegeechtheit in einem tiefen Schwarz, das zwischen Tageslicht und abendlichem Licht nicht nuanciert.

### Beispiel 3

Man verfährt gemäß der Verfahrensweise des Beispieles 1 oder 2, jedoch unter Einsatz von 50 Teilen einer wäßrigen Lösung mit 14 Teilen des Farbstoffes der Formel (A) und 1 Teil des Farbstoffes der Formel (B), 10 Teilen einer wäßrigen Lösung von 2 Teilen des Farbstoffes der Formel (C), 5 Teilen einer wäßrigen Lösung mit 0,7 Teilen des Farbstoffes der Formel (E) und 35 Teilen einer wäßrigen Lösung mit 6,9 Teilen des Farbstoffes der Formel (F)

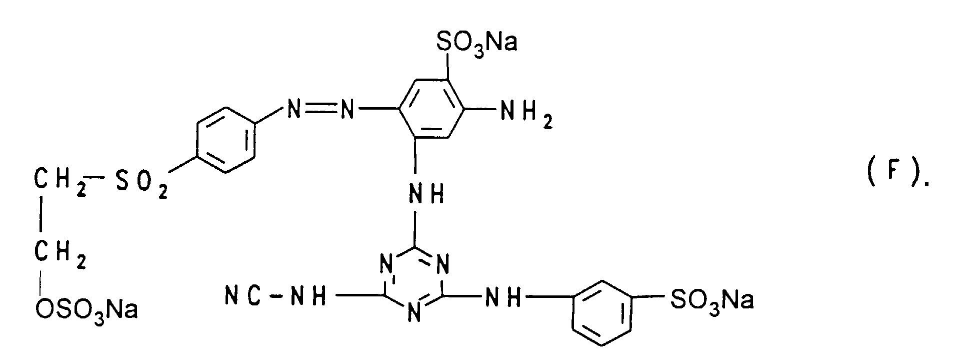

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden. Sie liefert nach den in der Technik für faserreaktive Farbstoffe üblichen Applikations-und Fixierverfahren beispielsweise auf Cellulosefasermaterialien Färbungen und Drucke mit guter Auswaschbarkeit nicht fixierter Farbstoffanteile und guter Naßliegeechtheit in einem tiefen Schwarz, das zwischen Tageslicht und abendlichem Licht nicht nuanciert.

### Beispiel 4

Gemäß den Angaben des Beispieles 1 oder 2 werden 100 Teile einer wäßrigen Lösung, enthaltend 30 Teile des Disazofarbstoffes der obengenannten Formel (A) und 1 Teil des Monoazofarbstoffes der obengenannten Formel (B), und 25 Teile einer wäßrigen Lösung, enthaltend 1 Teil des Farbstoffes der nachstehend genannten Formel (G) und 5,5 Teile des Farbstoffes der in Beispiel 1 genannten Formel (E), miteinander vermischt und, gegebenenfalls nach Zugabe üblicher Hilfsmittel, in eine flüssige oder feste (pulvrige oder granulierte) Färbepräparation übergeführt.

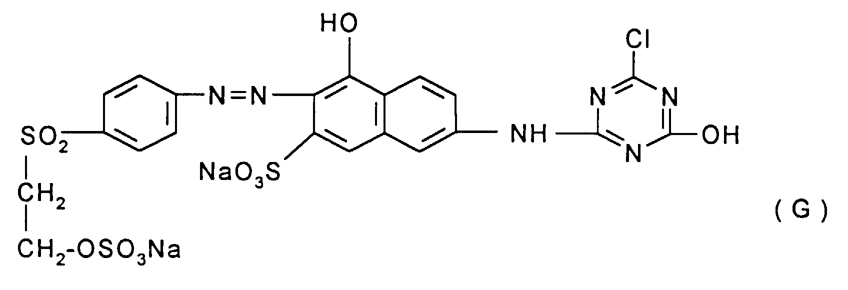

Diese erfindungsgemäße Farbstoffmischung färbt beispielsweise Cellulosefasern nach den für faserreaktive Farbstoffe üblichen Applikations- und Anwendungsmethoden in tiefen schwarzen Nuancen und guten Echtheitseigenschaften, beispielsweise guten Waschechtheiten.

### Beispiel 5

Gemäß den Angaben des Beispieles 1 oder 2 werden 100 Teile einer wäßrigen Lösung, enthaltend 30 Teile des Disazofarbstoffes der obengenannten Formel (A) und 0,3 Teile des Monoazofarbstoffes der obengenannten Formel (B), und 25 Teile einer wäßrigen Lösung, enthaltend 0,3 Teile des Farbstoffes der obengenannten Formel (E) und 5,7 Teile des Farbstoffes der obengenannten Formel (G), miteinander vermischt und, gegebenenfalls nach Zugabe üblicher Hilfsmittel, in eine flüssige oder feste (pulvrige oder granulierte) Färbepräparation übergeführt.

Diese erfindungsgemäße Farbstoffmischung färbt beispielsweise Cellulosefasern nach den für faserreaktive Farbstoffe üblichen Applikations- und Anwendungsmethoden in tiefen schwarzen Nuancen und guten Waschechtheiten.

### Beispiel 6

100 Teile einer wäßrigen Lösung, enthaltend 30 Teile des Disazofarbstoffes der obengenannten Formel (A) und 1,6 Teile des Monoazofarbstoffes der obengenannten Formel (B), und 25 Teile einer wäßrigen Lösung, enthaltend 3,2 Teile des Farbstoffes der obengenannten Formel (E) und 1,6 Teile des Farbstoffes der obengenannten Formel (G), werden miteinander vermischt und gegebenenfalls mit üblichen Färbehilfsmitteln und/oder Puffersubstanzen versetzt.

Die erhaltene erfindungsgemäße wäßrige Farbstoffmischung kann direkt der färberischen Verwendung zugeführt oder durch Sprühtrocknung oder Granulierung in die feste Form übergeführt werden. Sie liefert nach den in der Technik für faserreaktive Farbstoffe üblichen Applikations- und Fixierverfahren beispielsweise auf Cellulosefasermaterialien Färbungen und Drucke mit guter Auswaschbarkeit nicht fixierter Farbstoffanteile und guter Waschechtheit in einem tiefen Schwarz.

### Beispiel 7

100 Teile einer wäßrigen Lösung, enthaltend 30 Teile des Disazofarbstoffes der obengenannten Formel (A) und 1 Teil des Monoazofarbstoffes der obengenannten Formel (B), und 10 Teile einer wäßrigen Lösung, enthaltend 1,5 Teile des Farbstoffes der obengenannten Formel (C), sowie 20 Teile einer wäßrigen Lösung, enthaltend 3,5 Teile des Farbstoffes der obengenannten Formel (E) (wobei diese Lösungen noch Elektrolytsalze, wie Natriumchlorid, oder übliche Hilfsmittel, wie beispielsweise Puffer und tensidische Stoffe, enthalten können), werden miteinander vermischt.

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden. Sie liefert nach den in der Technik für faserreaktive Farbstoffe üblichen Applikations- und Fixierverfahren beispielsweise auf Cellulosefasermaterialien Färbungen und Drucke mit guter Auswaschbarkeit nicht fixierter Farbstoffanteile und guter Naßliegeechtheit in einem tiefen Schwarz.

### Beispiel 8

60 Teile eines 50%igen elektrolytsalzhaltigen Farbstoffpulvers des Disazofarbstoffes der obengenannten Formel (A), 4 Teile eines 50%igen elektrolytsalzhaltigen Farbstoffpulvers des Monoazofarbstoffes der obengenannten Formel (B), 14 Teile eine 50%igen elektrolytsalzhaltigen Farbstoffpulvers des Farbstoffes der obengenannten Formel (E) und 10 Teile eines 50%igen elektrolytsalzhaltigen Farbstoffpulvers des Farbstoffes der Formel (H) 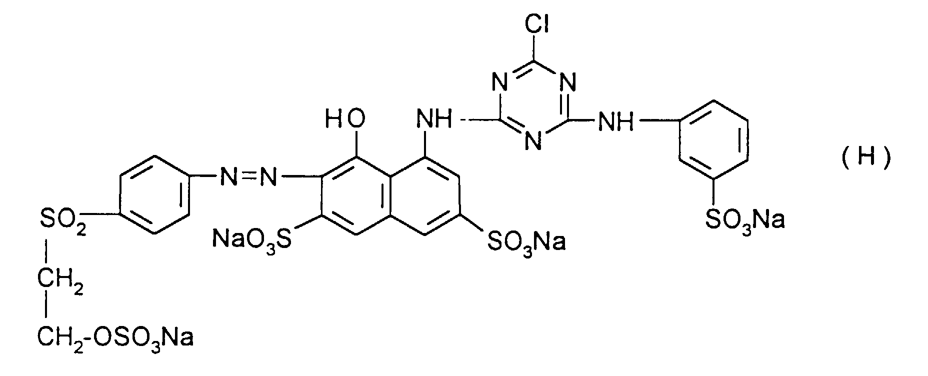 werden miteinander vermischt.

Die erhaltene erfindungsgemäße wäßrige Farbstoffmischung liefert nach den in der Technik für faserreaktive Farbstoffe üblichen Applikations- und Fixierverfahren beispielsweise auf Cellulosefasermaterialien Färbungen und Drucke mit guter Auswaschbarkeit nicht fixierter Farbstoffanteile und guter Naßliegeechtheit in einem tiefen Schwarz.

### Beispiel 9

100 Teile einer wäßrigen Lösung mit 30 Teilen des Disazofarbstoffes der Formel (A) und 0,3 Teilen des Monoazofarbstoffes der Formel (B) sowie 60 Teile einer wäßrigen Lösung mit 0,3 Teilen des Monoazofarbstoffes der Formel (E) und 5,7 Teilen des Monoazofarbstoffes der Formel (G) (wobei diese Lösungen noch Elektrolytsalze, wie Natriumchlorid, oder übliche Hilfsmittel, wie beispielsweise Puffer und tensidische Stoffe, enthalten können) werden miteinander vermischt. Die erhaltene Farbstofflösung besitzt einen Gesamtfarbstoffgehalt von 23 %. Sie wird durch Druckpermeation auf einen Farbstoffgehalt von 25 % aufkonzentriert und kann als Flüssigpräparation direkt in die üblichen Färbeprozesse zur Herstellung von Färbeflotten und -bädern eingesetzt werden.

### Beispiel 10

100 Teile einer wäßrigen Lösung mit 30 Teilen des Disazofarbstoffes der Formel (A) und 0,3 Teilen des Monoazofarbstoffes der Formel (B), 60 Teile einer wäßrigen Lösung mit 0,3 Teilen des Monoazofarbstoffes der Formel (E) und 5,7 Teilen des Monoazofarbstoffes der Formel (G) und 18 Teile einer wäßrigen Lösung mit 1,8 Teilen des Monoazofarbstoffes der Formel (H) und 3 Teilen eines Kondensationsproduktes aus Naphthalinsulfonsäure und Formaldehyd (wobei diese Lösungen noch Elektrolytsalze, wie Natriumchlorid, oder weitere übliche Hilfsmittel, wie Puffersubstanzen, enthalten können) werden miteinander vermischt. Die erhaltene Farbstofflösung besitzt einen Gesamtfarbstoffgehalt von 21 %. Sie kann als Flüssigpräparation direkt in die üblichen Färbeprozesse zur Herstellung von Färbeflotten und -bädern eingesetzt werden.

### Beispiele 11 bis 28

In den nachfolgenden Tabellenbeispielen sind weitere erfindungsgemäße Farbstoffmischungen beschrieben, mit denen in üblichen Färbe- und Druckverfahren tiefschwarze Färbungen, beispielsweise auf Cellulosefasermaterialien, erhältlich sind. Die Prozentangaben der einzelnen Farbstoffanteile beziehen sich auf den Gesamtfarbstoffgehalt (die mit Buchstaben bezeichneten Einzelfarbstoffe sind entweder bereits in den obigen Ausführungsbeispielen genannt oder sind nach der Tabelle formelmäßig beschrieben). Die Mischungen liegen in der Regel, wie bei wasserlöslichen Farbstoffen üblich, als elektrolytsalzhaltige (wie natriumchlorid- und natriumsulfathaltige) Farbstoffmischungen vor, wobei der Elektrolytsalzgehalt in der Regel zwischen 30 und 60 Gew.-%, bezogen auf das Gesamtgewicht des farbstoffhaltigen Produktes, liegt; solche Präparationen können Puffersubstanzen und andere übliche Hilfsmittel, wie Färbehilfsmittel, enthalten. Ebenso können diese in den Tabellenbeispielen beschriebenen Farbstoffmischungen als wäßrige Lösungen (Flüssigpräparationen) vorliegen, wobei der Gesamtfarbstoffgehalt in der Flüssigpräparation in der Regel zwischen 10 und 50 % liegt.

| Bsp. | Erfindungsgemäße Farbstoffmischung aus .... ....% Farbstoff + ...% Farbstoff (...) + ...... | | | | | |
|---|---|---|---|---|---|---|
| 11 | 82,4 % (A) | 4,1 % (B), | 4,1 % (C), | 6,3 % (E), | 3,0 % (G) | |
| 12 | 79,4 % (A), | 4,75 % (B), | 15,85 % (K) | | | |
| 13 | 79,55 % (A), | 4,25 % (B), | 2,4 % (C), | 13,8 % (K) | | |
| 14 | 80,2 % (A), | 4,3 % (B), | 8,3 % (E), | 7,2 % (K) | | |
| 15 | 78,95 % (A), | 5,25 % (B), | 6,3 % (E), | 9,5 % (K) | | |
| 16 | 74,5 % (A), | 3,7 % (B), | 16,1 % (E), | 5,7 % (H) | | |
| 17 | 77,5 % (A), | 2,05 % (B), | 15,0 % (E), | 5,45 % (H) | | |
| 18 | 77,15 % (A), | 4,1 % (B), | 2,05 % (C), | 13,35 % (E), | 0,25 % (G), | 3,1 % (D) |
| 19 | 78,35 % (A), | 3,65 % (B), | 2,35 % (C), | 13,3 % (E), | 0,5 % (G), | 1,85 % (D) |
| 20 | 75,2 % (A), | 4,25 % (B), | 14,8 % (E), | 0,25 % (G), | 2,0 % (H), | 3,5 % (F) |
| 21 | 75,35 % (A), | 4,55 % (B), | 14,6 % (E), | 0,5 % (G), | 2,25 %(H), | 2,75 % (F) |
| 22 | 77,75 % (A), | 4,15 % (B), | 15,0 % (E), | 3,1 % (I) | | |
| 23 | 77,5 % (A), | 4,15 % (B), | 15,0 % (E), | 3,35 % (J) | | |
| 24 | 81,1 % (A), | 4,3 % (B), | 8,9 % (E), | 4,05 % (G), | 1,65 % (N) | |
| 25 | 80,0 % (A), | 4,25 % (B), | 11,2 % (E), | 3,45 % (G), | 1,1 % (N) | |
| 26 | 81,4 % (A), | 4,35 % (B), | 11,95 % (E), | 1,62 % (G), | 0,68 % (N) | |
| 27 | 77,1 % (A), | 4,1 % (B), | 15,7 % (L), | 3,1 % (I) | | |
| 28 | 78,75 % (A), | 4,2 % (B), | 14,45 % (M), | 2,6 % (J) | | |

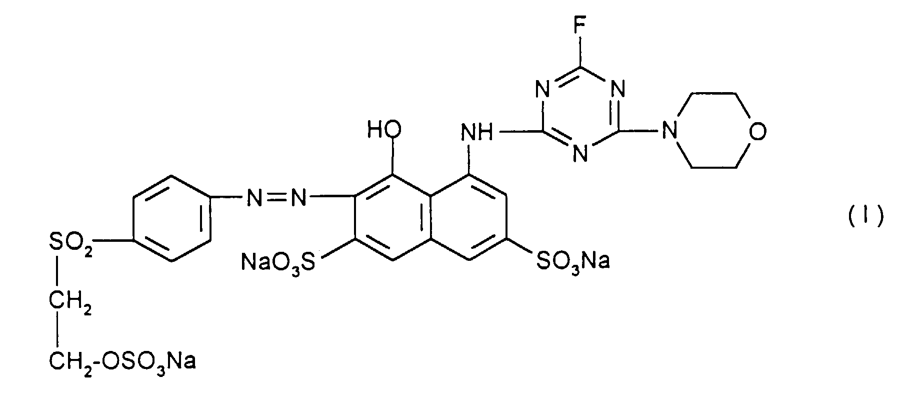

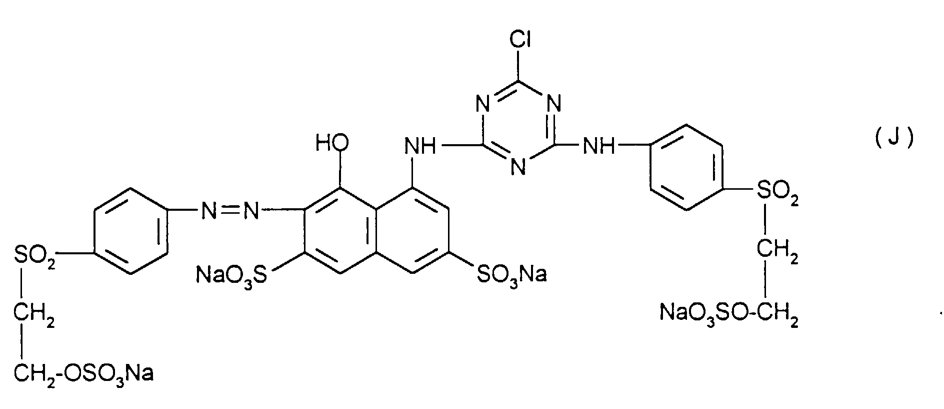

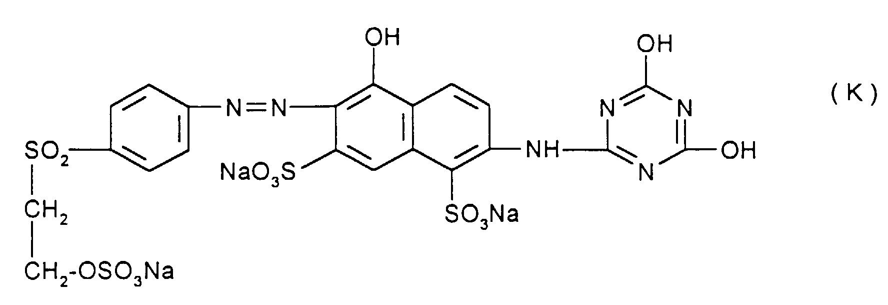

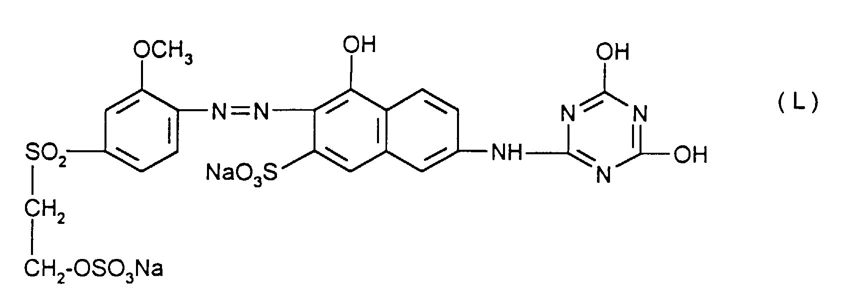

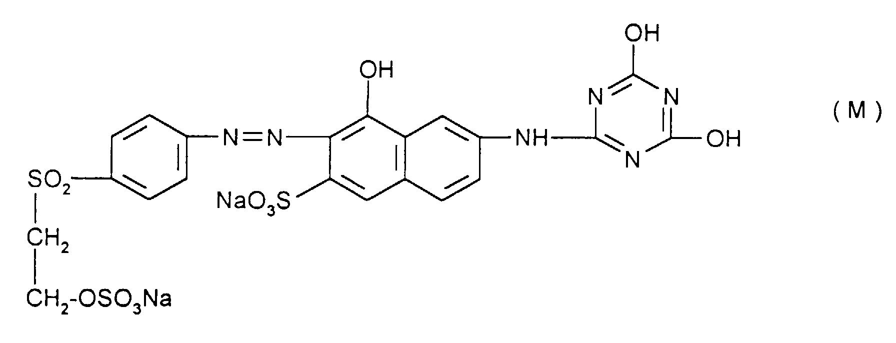

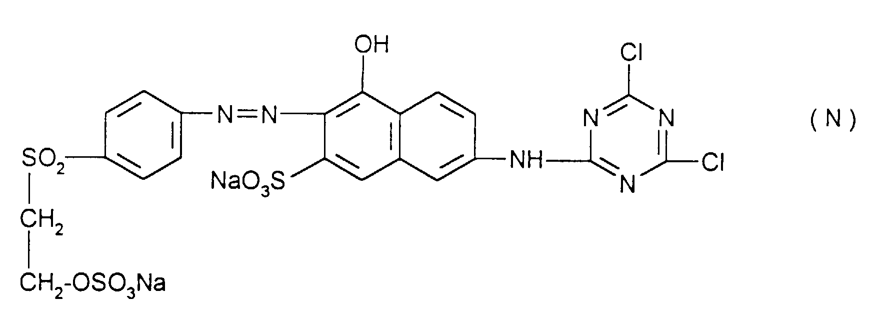

### Beispiel A

0,1 Mol der nach üblichen Methoden durch Umsetzung von 3-Amino-8-hydroxynaphthalin-6-sulfonsäure mit Cyanurchlorid erhältlichen bekannten Verbindung der Formel 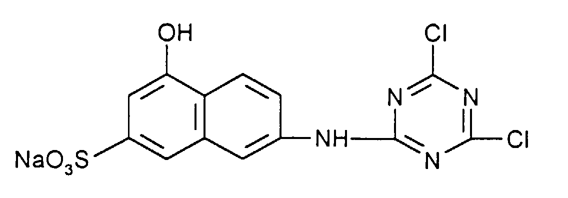 werden in 100 Teilen Wasser bei einem pH-Wert von 3,5 bei 95°C einige Zeit erhitzt. Nach Erkalten des Reaktionsansatzes fällt das entstandene 3-(2',4'-Dihydroxy-1',3',5'-triazin-6'-yl)-amino-6-sulfo-8-naphthol als kristallines Produkt aus. Es wird abgesaugt und isoliert.
0,07 Mol dieser Verbindung werden in 200 Teilen Wasser gelöst, und die Lösung wird mit einer auf üblichem Wege hergestellten Lösung von 0,075 Mol des Diazoniumsalzes aus 4-(β-Sulfatoethylsulfonyl)-anilin versetzt. Man führt die Kupplungsreaktion bei 10 bis 15°C und einem pH-Wert von 6 durch und erhält den erfindungsgemäßen Azofarbstoff der Formel (in Form der freien Säure geschrieben) 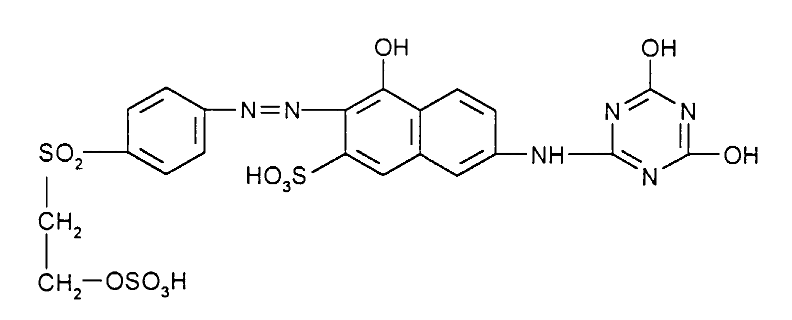 der aus der Syntheselösung durch Sprühtrocknung isoliert wird. Er besitzt, in Wasser als Natriumsalz gemessen, im sichtbaren Bereich ein Absorptionsmaximum bei 496 nm und färbt die in der Beschreibung genannten Fasermaterialien, wie beispielsweise Baumwolle, in orangenen Tönen in hoher Farbstärke und guten Echtheiten. Die mit ihm erhältlichen Färbungen sind beispielsweise leicht ätzbar.

### Beispiele B bis F

In den nachfolgenden Tabellenbeispielen sind weitere erfindungsgemäße Azofarbstoffe entsprechend der allgemeinen Formel (A) 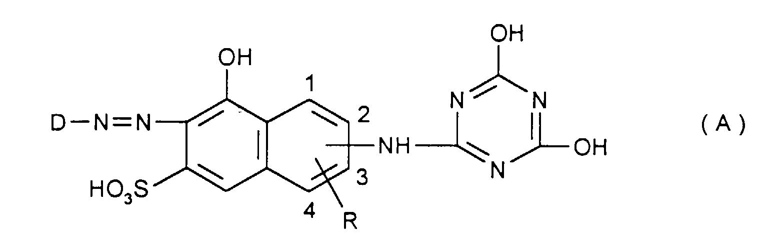 anhand ihrer Komponenten beschrieben. Sie lassen sich in erfindungsgemäßer Weise, beispielsweise analog dem obigen Ausführungsbeispiel A, aus den aus der allgemeinen Formel (A) ersichtlichen Ausgangsverbindungen (der Diazokomponente D-NH₂, Cyanurchlorid und einer Amino-sulfonaphthol-Verbindung) herstellen. Sie besitzen sehr gute faserreaktive Farbstoffeigenschaften und färben die in der Beschreibung genannten Fasermaterialien, wie insbesondere Cellulosefasermaterialien, in dem in dem jeweiligen Tabellenbeispiel (hier für Baumwolle) angegebenen Farbton in hoher Farbstärke und guten Echtheiten.
Die in Klammern befindlichen Zahlen in der Rubrik ("Farbton") geben den λₘₐₓ-Wert im sichtbaren Bereich (gemessen in wäßriger Lösung ihrer Alkalimetallsalze) an.

| Bsp. | Farbstoff der allgemeinen Formel (A) | | | Farbton |
|---|---|---|---|---|
| | Rest D | Triazinylamino in ... Stellung | Rest R in ... Stellung | |
| B | 4-(β-Sulfatoethylsulfonyl)-phenyl | 1-Stellung | 3-Sulfo | rot (521) |
| C | dito | dito | 4-Sulfo | rot |
| D | 2-Methoxy-5-sulfo-4-(β-sulfatoethyl-sulfonyl)-phenyl | 3-Stellung | Wasserstoff | rotstichig orange (510) |
| E | 4-(β-Sulfatoethyl-sulfonyl)-phenyl | 3-Stellung | 4-Sulfo | orange (496) |
| F | dito | 2-Stellung | Wasserstoff | orange (501) |

## Patentansprüche

1. Farbstoffmischung, gekennzeichnet durch den Gehalt eines oder mehrerer Disazofarbstoffe entsprechend der allgemeinen Formel (1) und eines oder mehrerer Monoazofarbstoffe entsprechend der allgemeinen Formel (2) mit einem Anteil des oder der Farbstoffe (2) von mindestens 3 Mol-%, bezogen auf die Gesamtmenge der Farbstoffe (1) und (2), in der Farbstoffmischung: 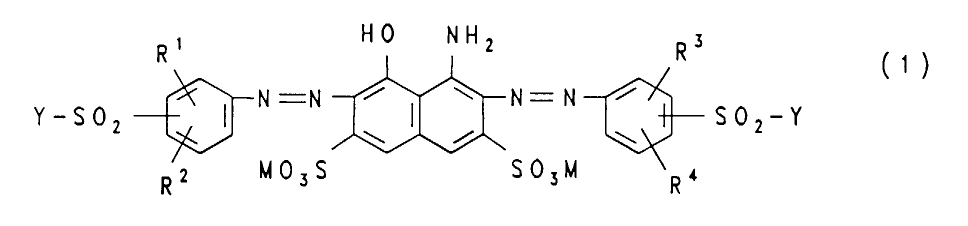 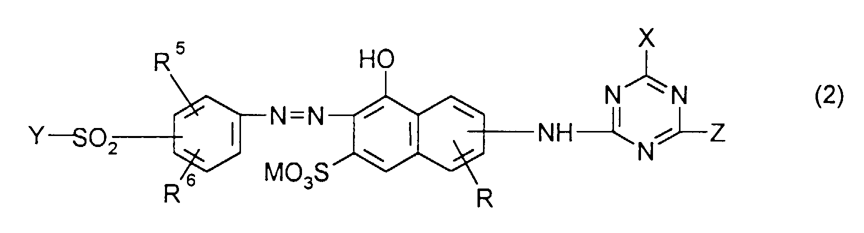 in welchen bedeuten:
M ist Wasserstoff oder ein Alkalimetall;
R¹ ist Wasserstoff, Methyl, Ethyl, Methoxy, Ethoxy oder Sulfo;
R² ist Wasserstoff, Methyl, Ethyl, Methoxy oder Ethoxy;
R³ ist Wasserstoff, Methyl, Ethyl, Methoxy, Ethoxy oder Sulfo;
R⁴ ist Wasserstoff, Methyl, Ethyl, Methoxy oder Ethoxy;
R⁵ ist Wasserstoff, Methyl, Ethyl, Methoxy, Ethoxy oder Sulfo;
R⁶ ist Wasserstoff, Methyl, Ethyl, Methoxy oder Ethoxy;
Y ist jedes, unabhängiges voneinander, Vinyl, β-Chlorethyl, β-Thiosulfatoethyl oder β-Sulfatoethyl;
R steht in 3- oder 4-Stellung am 6-Sulfo-8-hydroxy-naphth-7-yl-Rest und ist Wasserstoff oder Sulfo;
X ist Chlor oder Hydroxy;
Z ist Chlor oder Hydroxy;
die Triazinylamino-Gruppe in Formel (2) steht im Falle von R gleich Wasserstoff in 2- oder 3-Stellung an den 6-Sulfo-8-hydroxynaphth-7-yl-Rest, im Falle von R gleich 4-Sulfo in 1- oder 3-Stellung an den 6-Sulfo-8-hydroxy-naphth-7-yl-Rest und im Falle von R gleich 3-Sulfo in 1-Stellung an den 6-Sulfo-8-hydroxynapth-7-yl-Rest gebunden;
im Falle von X und Z gleich beide Chlor ist zwingend mindestens ein weiterer Farbstoff der Formel (2) mit X oder Z gleich Hydroxy in der Mischung enthalten.

2. Farbstoffmischung nach Anspruch 1, dadurch gekennzeichnet, daß sie zusätzlich einen oder zwei Monoazofarbstoffe der allgemeinen Formel (3) 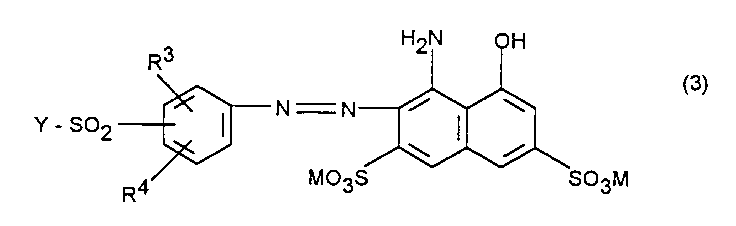 in welcher R³, R⁴, Y und M die in Anspruch 1 genannten Bedeutungen haben, enthält.

3. Farbstoffmischung nach Anspruch 1 oder 2, dadurch gekennzeichnet, daß sie zusätzlich einen oder mehrere Monoazofarbstoffe der allgemeinen Formel (4) 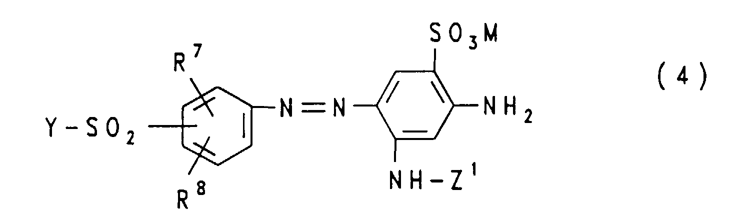 enthält, in welcher bedeuten:
M ist Wasserstoff oder ein Alkalimetall;
Y ist Vinyl, β-Chlorethyl, β-Thiosulfatoethyl oder β-Sulfatoethyl;
R⁷ ist Wasserstoff, Methyl, Ethyl, Methoxy oder Ethoxy;
R⁸ ist Wasserstoff, Methyl, Ethyl, Methoxy oder Ethoxy;
Z¹ ist Alkanoyl von 2 bis 5 C-Atomen, Benzoyl, 2,4-Dichlor-1,3,5-triazin-6-yl oder eine Gruppe der allgemeinen Formel (a) 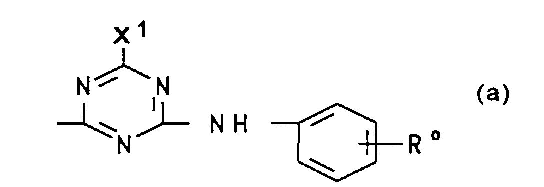 in welcher
X¹ Chlor, Fluor oder Cyanoamino und
R^{o} Sulfo, Carboxy oder eine Gruppe der allgemeinen Formel -SO₂-Y mit Y einer der obengenannten Bedeutung ist.

4. Farbstoffmischung nach mindestens einem der Ansprüche 1 bis 3, dadurch gekennzeichnet, daß sie zusätzlich einen Farbstoff der allgemeinen Formel (5) 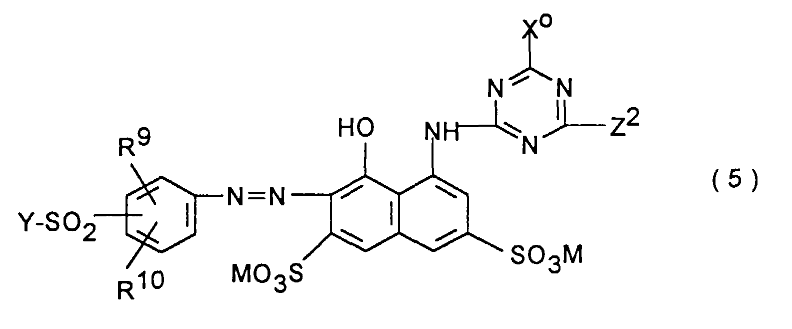 enthält, in welcher bedeuten:
M ist Wasserstoff oder ein Alkalimetall;
R⁹ ist Wasserstoff, Methyl, Ethyl, Methoxy oder Ethoxy;
R¹⁰ ist Wasserstoff, Methyl, Ethyl, Methoxy oder Ethoxy;
Y ist Vinyl, β-Chlorethyl, β-Thiosulfatoethyl oder β-Sulfatoethyl;
X^{o} ist Chlor, Fluor oder Hydroxy;
Z² ist Chlor, Morpholino oder eine Gruppe der allgemeinen Formel (b) 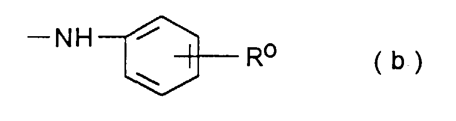 mit R^{o} einer der obengenannten Bedeutungen.

5. Farbstoffmischung nach mindestens einem der Ansprüche 1 bis 4, dadurch gekennzeichnet, daß R¹, R³, R⁵, R⁷ und R⁹ unabhängig voneinander jedes Wasserstoff oder Methoxy ist und R², R⁴, R⁶, R⁸ und R¹⁰ jedes Wasserstoff bedeuten.

6. Farbstoffmischung nach mindestens einem der Ansprüche 1 bis 4, dadurch gekennzeichnet, daß R¹, R², R³, R⁴, R⁵ und R⁶ jedes Wasserstoff bedeuten.

7. Farbstoffmischung nach mindestens einem der Ansprüche 1 bis 6, dadurch gekennzeichnet, daß die Farbstoffe der allgemeinen Formeln (1) und (2) in der Mischung in einem molaren Mischungsverhältnis zwischen 97 : 3 und 60 : 40 vorliegen.

8. Farbstoffmischung nach mindestens einem der Ansprüche 1 bis 6, dadurch gekennzeichnet, daß die Farbstoffe der allgemeinen Formeln (1) und (2) in der Mischung in einem molaren Mischungsverhältnis zwischen 90 : 10 und 65 : 35 vorliegen.

9. Farbstoffmischung nach mindestens einem der Ansprüche 1 bis 8, dadurch gekennzeichnet, daß Y jedes unabhängig voneinander Vinyl oder β-Sulfatoethyl ist.

10. Farbstoffmischung nach mindestens einem der Ansprüche 1 bis 9, dadurch gekennzeichnet, daß in den Farbstoffen der Formel (2) X und Z beide Hydroxy sind.

11. Verfahren zur Herstellung einer Farbstoffmischung gemäß Anspruch 1, dadurch gekennzeichnet, daß man die Einzelfarbstoffe oder Mischungen von 2 oder 3 solcher Einzelfarbstoffe mit den anderen Einzelfarbstoffen in Form von deren Farbstoffpulvern oder wäßrigen Lösungen miteinander vermischt.

12. Verfahren nach Anspruch 11 zur Herstellung einer wäßrigen Lösung von Farbstoffmischungen, dadurch gekennzeichnet, daß man die wäßrigen Lösungen der Einzelfarbstoffe oder gegebenenfalls wäßrige Lösungen von zwei oder drei der Einzelfarbstoffe in der Weise miteinander vermischt, daß man während der Zugabe der Komponenten den Farbton der Mischung mit einer ATR-Sonde steuert.

13. Verwendung einer Farbstoffmischung von mindestens einem der Ansprüche 1 bis 10 zum Färben von hydroxy- und/oder carbonamidgruppenhaltigem Fasermaterial.

14. Verfahren zum Färben von hydroxy- und/oder carbonamidgruppenhaltigem Fasermaterial, bei welchem man einen Farbstoff oder eine Mischung von Farbstoffen in gelöster Form auf das Material aufbringt und den oder die Farbstoffe auf dem Material mittels Wärme und/oder mit Hilfe eines alkalisch wirkenden Mittels fixiert, dadurch gekennzeichnet, daß man als Farbstoffe eine Farbstoffmischung von mindestens einem der Ansprüche 1 bis 10 einsetzt.

15. Azoverbindung entsprechend der allgemeinen Formel (3A) 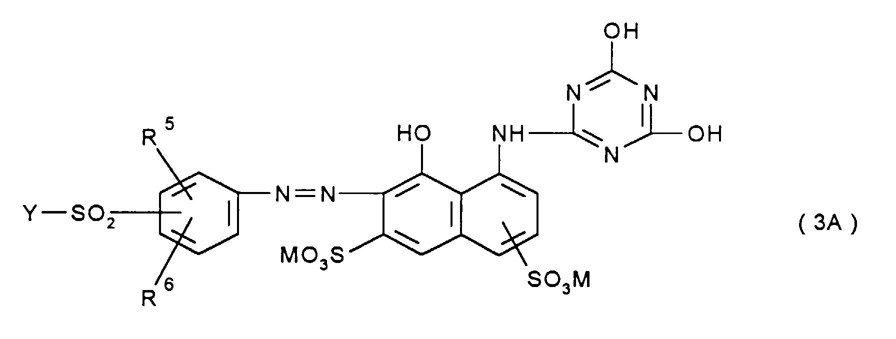 in welcher bedeuten:
M ist Wasserstoff oder ein Alkalimetall;
R⁵ ist Wasserstoff, Methyl, Ethyl, Methoxy, Ethoxy oder Sulfo;
R⁶ ist Wasserstoff, Methyl, Ethyl, Methoxy oder Ethoxy;
Y ist Vinyl, β-Chlorethyl, β-Thiosulfatoethyl oder β-Sulfatoethyl;
die eine Gruppe -SO₃M steht in meta- oder para-Stellung zur Triazinylamino-Gruppe gebunden.

16. Azoverbindung entsprechend der allgemeinen Formel (3B) 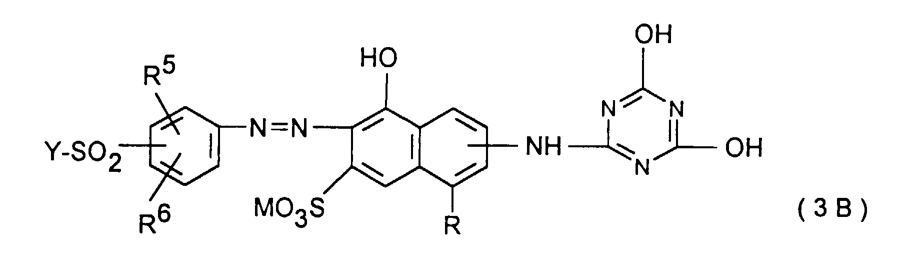 in welcher bedeuten:
M ist Wasserstoff oder ein Alkalimetall;
R ist Wasserstoff oder Sulfo;
R⁵ ist Wasserstoff, Methyl, Ethyl, Methoxy, Ethoxy oder Sulfo;
R⁶ ist Wasserstoff, Methyl, Ethyl, Methoxy oder Ethoxy;
Y ist Vinyl, β-Chlorethyl, β-Thiosulfatoethyl oder β-Sulfatoethyl;
die Triazinylamino-Gruppe steht im Falle von R gleich Wasserstoff in 2- oder 3-Stellung und im Falle von R gleich Sulfo in 3-Stellung an den 6-Sulfo-8-hydroxy-naphth-7-yl-Rest gebunden.

17. Verfahren zur Herstellung einer Verbindung der allgemeinen Formel (3A) oder (3B) gemäß Anspruch 15 oder 16, dadurch gekennzeichnet, daß man eine Verbindung der allgemeinen Formel (4b) bzw. (5b) 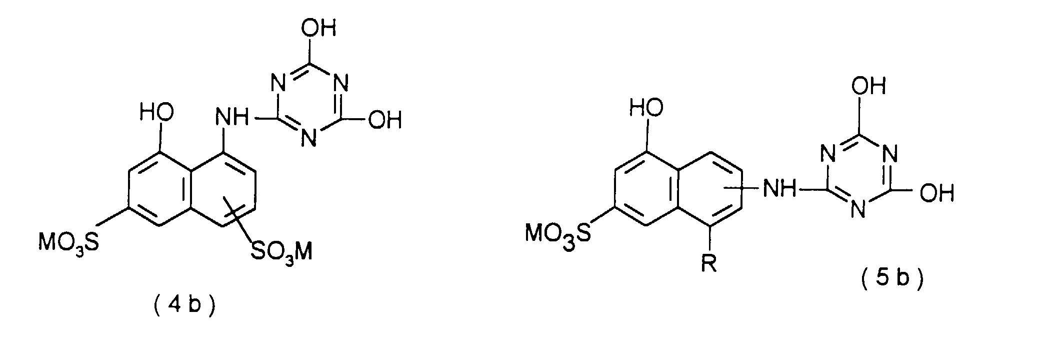 in welcher M die oben genannte Bedeutung besitzt und in Formel (5b) die Dihydroxy-triazinylamino-Gruppe im Falle von R gleich Wasserstoff in 2-oder 3-Stellung und im Falle von R gleich Sulfo in 3-Stellung an den 6-Sulfo-8-hydroxy-naphth-2-yl-Rest gebunden ist, mit dem Diazoniumsalz einer Aminoverbindung der allgemeinen Formel (6) 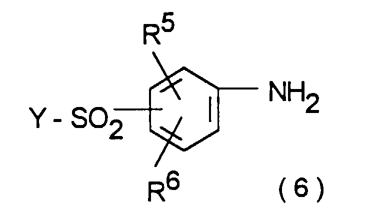 in welcher Y, R⁵ und R⁶ die in Anspruch 12 genannten Bedeutungen haben, bei einer Temperatur zwischen 5 und 35°C und einem pH-Wert zwischen 4 und 7 kuppelt.

18. Verwendung einer Azoverbindung von Anspruch 15 oder einer Azoverbindung von Anspruch 16 zum Färben von hydroxy- und/oder carbonamidgruppenhaltigem Fasermaterial.

19. Verfahren zum Färben von hydroxy- und/oder carbonamidgruppenhaltigem Fasermaterial, bei welchem man einen Farbstoff in gelöster Form auf das Material aufbringt und den oder die Farbstoffe auf dem Material mittels Wärme und/oder mit Hilfe eines alkalisch wirkenden Mittels fixiert, dadurch gekennzeichnet, daß man als Farbstoff eine Azoverbindung von Anspruch 15 oder eine Azoverbindung von Anspruch 16 einsetzt.

## Claims

1. A dyestuff mixture which has a content of one or more disazo dyestuffs corresponding to the formula (1) and of one or more monoazo dyestuffs corresponding to the formula (2) with a proportion of the dyestuff or dyestuffs (2) of at least 3 mol%, based on the total amount of the dyestuffs (1) and (2), in the dyestuff mixture: 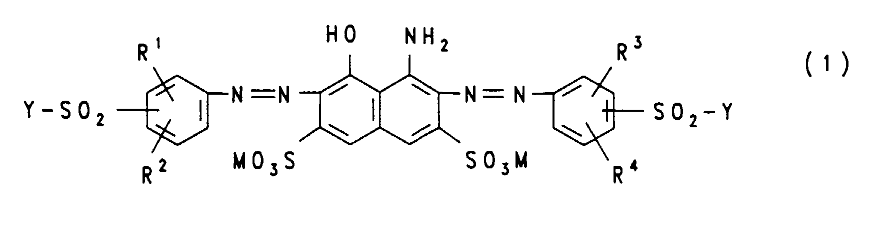 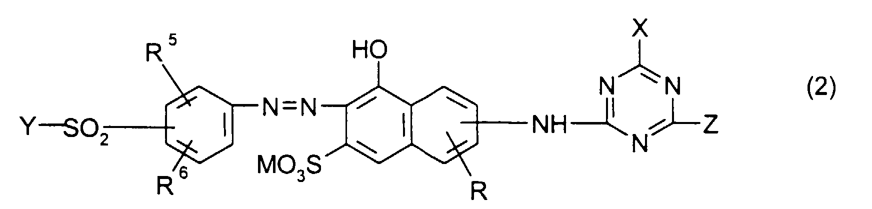 in which:
M is hydrogen or an alkali metal;
R¹ is hydrogen, methyl, ethyl, methoxy, ethoxy or sulfo;
R² is hydrogen, methyl, ethyl, methoxy or ethoxy;
R³ is hydrogen, methyl, ethyl, methoxy, ethoxy or sulfo;
R⁴ is hydrogen, methyl, ethyl, methoxy or ethoxy;
R⁵ is hydrogen, methyl, ethyl, methoxy, ethoxy or sulfo;
R⁶ is hydrogen, methyl, ethyl, methoxy or ethoxy;
Y is in each case independently of one another vinyl, β-chloroethyl, β-thiosulfatoethyl or β-sulfatoethyl;
R is in the 3- or 4-position on the 6-sulfo-8-hydroxy-naphth-7-yl radical and is hydrogen or sulfo;
X is chlorine or hydroxyl;
Z is chlorine or hydroxyl;
the triazinylamino group in formula (2) is bonded in the 2- or 3-position on the 6-sulfo-8-hydroxy-naphth-7-yl radical if R is hydrogen, in the 1- or 3-position on the 6-sulfo-8-hydroxynaphth-7-yl radical if R is 4-sulfo and in the 1-position on the 6-sulfo-8-hydroxy-napth-7-yl radical if R is 3-sulfo; and
if X and Z are both chlorine, the mixture necessarily comprises at least one further dyestuff of the formula (2) where X or Z is hydroxyl.

2. A dyestuff mixture as claimed in claim 1, which additionally comprises one or two monoazo dyestuffs of the formula (3) 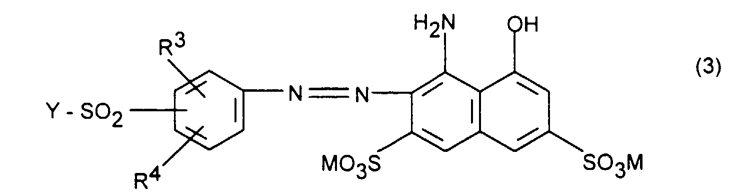 in which R³, R⁴, Y and M have the meanings given in claim 1.

3. A dyestuff mixture as claimed in claim 1 or 2, which additionally comprises one or more monoazo dyestuffs of the formula (4) 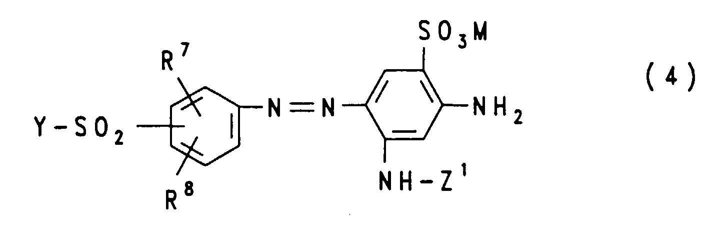 in which:
M is hydrogen or an alkali metal;
Y is vinyl, β-chloroethyl, β-thiosulfatoethyl or β-sulfatoethyl;
R⁷ is hydrogen, methyl, ethyl, methoxy or ethoxy;
R⁸ is hydrogen, methyl, ethyl, methoxy or ethoxy; and
Z¹ is alkanoyl having 2 to 5 carbon atoms, benzoyl, 2,4-dichloro-1,3,5-triazin-6-yl or a group of the formula (a) 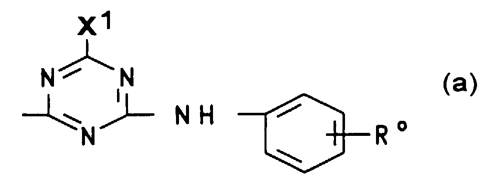 in which
X¹ is chlorine, fluorine or cyanoamino and
R^{o} is sulfo, carboxyl or a group of the formula -SO₂-Y, where Y has one of the abovementioned meanings.

4. A dyestuff mixture as claimed in at least one of claims 1 to 3, which additionally comprises a dyestuff of the formula (5) 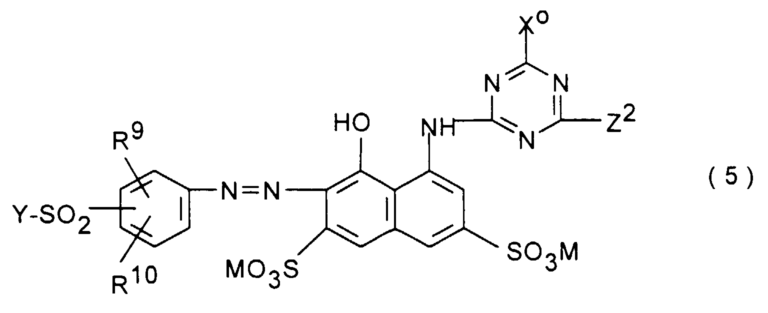 in which:
M is hydrogen or an alkali metal;
R⁹ is hydrogen, methyl, ethyl, methoxy or ethoxy;
R¹⁰ is hydrogen, methyl, ethyl, methoxy or ethoxy;
Y is vinyl, β-chloroethyl, β-thiosulfatoethyl or β-sulfatoethyl;
X^{o} is chlorine, fluorine or hydroxyl; and
Z² is chlorine, morpholino or a group of the formula (b) 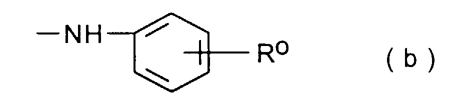 where R° has one of the abovementioned meanings.

5. A dyestuff mixture as claimed in at least one of claims 1 to 4, wherein R¹, R³, R⁵, R⁷ and R⁹ independently of one another are each hydrogen or methoxy and R², R⁴, R⁶, R⁸ and R¹⁰ are each hydrogen.

6. A dyestuff mixture as claimed in at least one of claims 1 to 4, wherein R¹, R², R³, R⁴, R⁵ and R⁶ are each hydrogen.

7. A dyestuff mixture as claimed in at least one of claims 1 to 6, wherein the dyestuffs of the formulae (1) and (2) are present in the mixture in a molar mixture ratio of between 97 : 3 and 60 : 40.

8. A dyestuff mixture as claimed in at least one of claims 1 to 6, wherein the dyestuffs of the formulae (1) and (2) are present in the mixture in a molar mixture ratio of between 90 : 10 and 65 : 35.

9. A dyestuff mixture as claimed in at least one of claims 1 to 8, wherein Y is in each case independently of one another vinyl or β-sulfatoethyl.

10. A dyestuff mixture as claimed in at least one of claims 1 to 9, wherein, in the dyestuffs of the formula (2), X and Z are both hydroxyl.

11. A process for the preparation of a dyestuff mixture as claimed in claim 1, which comprises mixing with one another the individual dyestuffs or mixtures of 2 or 3 such individual dyestuffs with the other individual dyestuffs in the form of their dyestuff powders or aqueous solutions.

12. The process as claimed in claim 11 for the preparation of an aqueous solution of a dyestuff mixture, wherein the aqueous solutions of the individual dyestuffs or, if appropriate, aqueous solutions of 2 or 3 of the individual dyestuffs are mixed with one another in a manner such that the color shade of the mixture is controlled with an ATR probe during the addition of the components.

13. The use of a dyestuff mixture as claimed in at least one of claims 1 to 10 for dyeing fiber material containing hydroxyl and/or carboxamide groups.

14. A process for dyeing fiber material containing hydroxyl and/or carboxamide groups, in which a dyestuff or a mixture of dyestuffs is applied in dissolved form to the material and the dyestuff or dyestuffs is or are fixed on the material by means of heat and/or with the aid of an agent having an alkaline action, which comprises employing a dyestuff mixture as claimed in at least one of claims 1 to 10 as the dyestuffs.

15. An azo compound corresponding to the formula (3A) 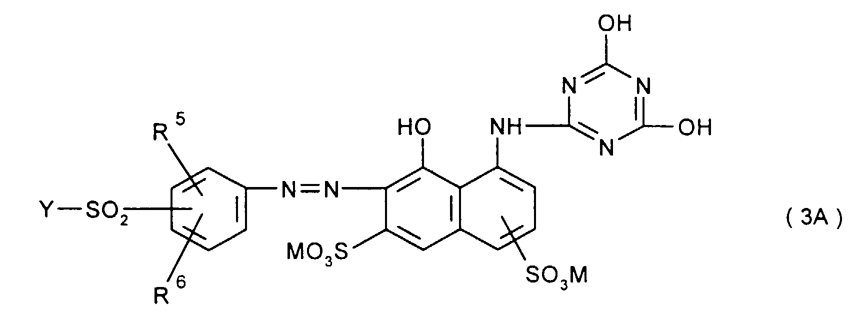 in which:
M is hydrogen or an alkali metal;
R⁵ is hydrogen, methyl, ethyl, methoxy, ethoxy or sulfo;
R⁶ is hydrogen, methyl, ethyl, methoxy or ethoxy;
Y is vinyl, β-chloroethyl, β-thiosulfatoethyl or β-sulfatoethyl; and
the one group -SO₃M is bonded in the meta- or para-position relative to the triazinylamino group.

16. An azo compound corresponding to the formula (3B) 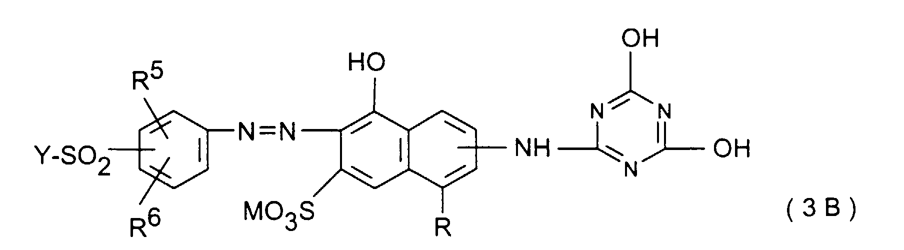 in which:
M is hydrogen or an alkali metal;
R is hydrogen or sulfo;
R⁵ is hydrogen, methyl, ethyl, methoxy, ethoxy or sulfo;
R⁶ is hydrogen, methyl, ethyl, methoxy or ethoxy;
Y is vinyl, β-chloroethyl, β-thiosulfatoethyl or β-sulfatoethyl; and
the triazinylamino group is bonded in the 2- or 3-position if R is hydrogen and in the 3-position on the 6-sulfo-8-hydroxynaphth-7-yl radical if R is sulfo.

17. A process for the preparation of a compound of the formula (3A) or (3B) as claimed in claim 15 or 16, which comprises coupling a compound of the formula (4b) or (5b) 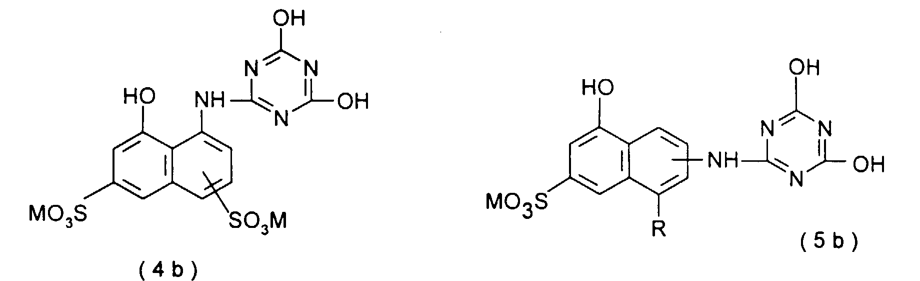 in which M has the abovementioned meaning and in formula (5b) the dihydroxy-triazinylamino group is bonded in the 2- or 3-position if R is hydrogen and in the 3-position on the 6-sulfo-8-hydroxy-naphth-2-yl radical if R is sulfo, with the diazonium salt of an amino compound of the formula (6) 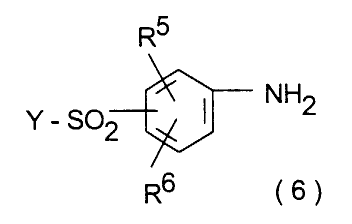 in which Y, R⁵ and R⁶ have the meanings given in claim 15, at a temperature between 5 and 35°C and a pH of between 4 and 7.

18. The use of an azo compound as claimed in claim 15 or an azo compound as claimed in claim 16 for dyeing fiber material containing hydroxyl and/or carboxamide groups.

19. A process for dyeing fiber material containing hydroxyl and/or carboxamide groups, in which a dyestuff is applied in dissolved form to the material and the dyestuff or dyestuffs is or are fixed on the material by means of heat and/or with the aid of an agent having an alkaline action, which comprises employing an azo compound as claimed in claim 15 or an azo compound as claimed in claim 16 as the dyestuff.

## Revendications

1. Mélange de colorants, caractérisé par la teneur en un ou plusieurs colorants diazoïques correspondant à la formule générale (1) et en un ou plusieurs colorants monoazoïques correspondant à la formule générale (2) avec une proportion du ou des colorants (2) d'au moins 3% en mole, sur base du poids total des colorants (1) et (2), dans le mélange de colorants: 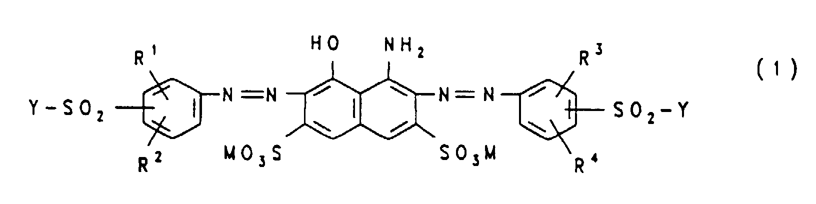 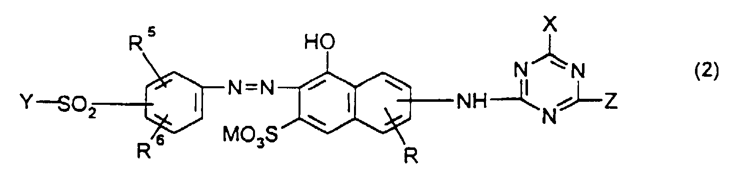 formules dans lesquelles :
M est un hydrogène ou un métal alcalin;
R¹ est un hydrogène, un méthyle, un éthyle, un méthoxy, un éthoxy ou un sulfo;
R² est un hydrogène, un méthyle, un éthyle, un méthoxy ou un éthoxy;
R³ est un hydrogène, un méthyle, un éthyle, un méthoxy, un éthoxy ou un sulfo;
R⁴ est un hydrogène, un méthyle, un éthyle, un méthoxy ou un éthoxy;
R⁵ est un hydrogène, un méthyle, un éthyle, un méthoxy, un éthoxy ou un sulfo;
R⁶ est un hydrogène, un méthyle, un éthyle, un méthoxy ou un éthoxy;
Y est chacun, indépendant l'un de l'autre, un vinyle, β-chloroéthyle, β-thiosulfatoéthyle ou β-sulfatoéthyle;
R est en position 3 ou 4 sur le radical 6-sulfo-8-hydroxynapht-7-yle et est un hydrogène ou un sulfo;
X est un chlore ou un hydroxy;
Z est un chlore ou un hydroxy;
le groupement triazinylamino dans la formule (2) est lié, dans le cas où R est égal à un hydrogène, en position 2 ou 3 sur le radical 6-sulfo-8-hydroxynapht-7-yle, dans le cas où R est égal à un 4-sulfo, en position 1 ou 3 sur le radical 6-sulfo-8-hydroxynapht-7-yle et dans le cas où R est égal à un 3-sulfo en position 1 sur le radical 6-sulfo-8-hydroxynapht-7-yle;
dans le cas où X et Z sont tous deux égaux à un chlore, au moins un autre colorant de formule (2) avec X ou Z égal à un hydroxy est obligatoirement contenu dans le mélange.

2. Mélange de colorants suivant la revendication 1, caractérisé en ce qu'il contient en plus un ou deux colorants monoazoïques de formule générale (3) 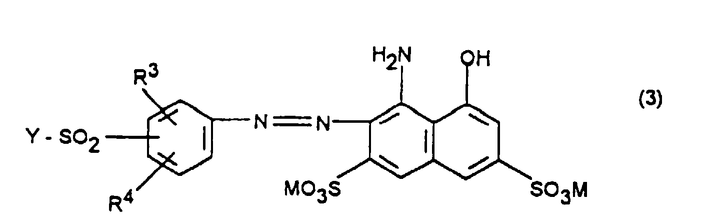 dans laquelle R³, R⁴, Y et M ont les significations citées à la revendication 1.

3. Mélange de colorants suivant la revendication 1 ou 2, caractérisé en ce qu'il contient en plus un ou plusieurs colorants monoazoïques de formule générale (4) 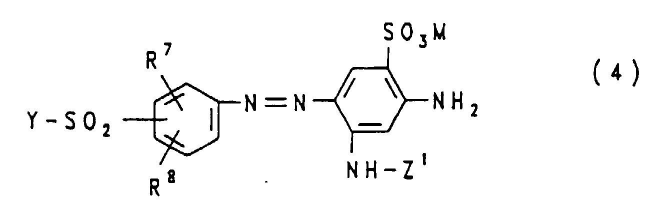 dans laquelle :
M est un hydrogène ou un métal alcalin;
Y est un vinyle, un β-chloroéthyle, un β-thiosulfatoéthyle ou un β-sulfatoéthyle;
R⁷ est un hydrogène, un méthyle, un éthyle, un méthoxy ou un éthoxy;
R⁸ est un hydrogène, un méthyle, un éthyle, un méthoxy ou un éthoxy;
Z¹ est un alcanoyle de 2 à 5 atomes de carbone, un benzoyle, un 2,4-dichloro-1,3,5-triazin-6-yle ou un groupement de formule générale (a) 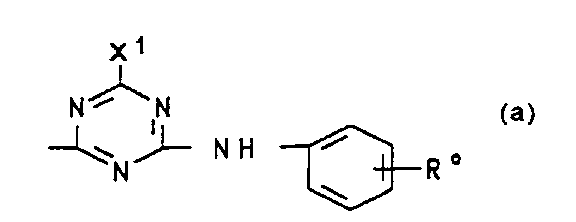 dans laquelle
X¹ est un chlore, un fluor ou un cyanoamino, et
R⁰ est un sulfo, un carboxy ou un groupement de formule générale -SO₂-Y, Y ayant l'une des significations citées ci-dessus.

4. Mélange de colorants suivant au moins l'une des revendications 1 à 3, caractérisé en qu'il contient en plus un colorant de formule générale (5) 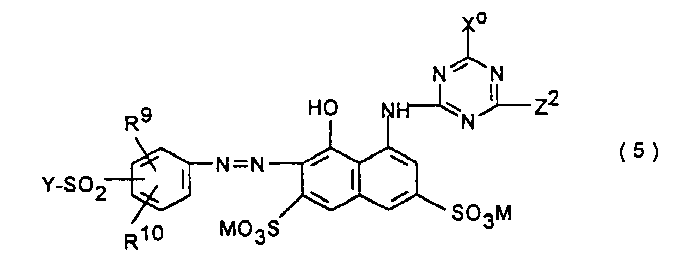 dans laquelle :
M est un hydrogène ou un métal alcalin;
R⁹ est un hydrogène, un méthyle, un éthyle, un méthoxy ou un éthoxy;
R¹⁰ est un hydrogène, un méthyle, un éthyle, un méthoxy ou un éthoxy;
Y est un vinyle, un β-chloroéthyle, un β-thiosulfatoéthyle ou un β-sulfatoéthyle;
X⁰ est un chlore, un fluor ou un hydroxy;
Z² est un chlore, un morpholino ou un groupement de formule générale (b) 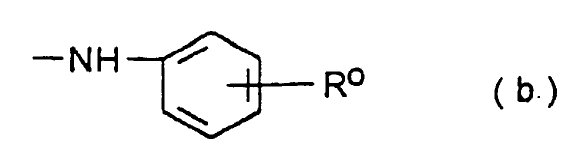 avec R⁰ ayant l'une des significations citées ci-dessus.

5. Mélange de colorants suivant au moins l'une des revendications 1 à 4, caractérisé en ce que R¹, R³, R⁵, R⁷ et R⁹ sont chacun, indépendamment l'un de l'autre, un hydrogène ou un méthoxy et R², R⁴, R⁶, R⁸ et R¹⁰ signifient chacun un hydrogène.

6. Mélange de colorants suivant au moins l'une des revendications 1 à 4, caractérisé en ce que R¹, R², R³, R⁴, R⁵ et R⁶ signifient chacun un hydrogène.

7. Mélange de colorants suivant au moins l'une des revendications 1 à 6, caractérisé en ce que les colorants des formules générales (1) et (2) sont présents dans le mélange dans un rapport molaire de mélange entre 97:3 et 60:40.

8. Mélange de colorants suivant au moins l'une des revendications 1 à 6, caractérisé en ce que les colorants des formules générales (1) et (2) sont présents dans le mélange dans un rapport molaire de mélange entre 90:10 et 65:35.

9. Mélange de colorants suivant au moins l'une des revendications 1 à 8, caractérisé en ce que Y est chacun, indépendamment l'un de l'autre, un vinyle ou un β-sulfatoéthyle.

10. Mélange de colorants suivant au moins l'une des revendications 1 à 9, caractérisé en ce que, dans les colorants de formule (2), X et Z sont tous deux un hydroxy.

11. Procédé de préparation d'un mélange de colorants suivant la revendication 1, caractérisé en ce qu'on mélange ensemble les colorants individuels ou des mélanges de 2 ou 3 colorants individuels de ce type avec les autres colorants individuels sous la forme de leurs poudres colorantes ou de solutions aqueuses.

12. Procédé de préparation d'une solution aqueuse de mélanges de colorants suivant la revendication 11, caractérisé en ce qu'on mélange ensemble les solutions aqueuses des colorants individuels ou, le cas échéant, les solutions aqueuses de deux ou trois des colorants individuels de telle sorte que l'on règle la nuance de couleur du mélange pendant l'addition des composants avec une sonde ATR.

13. Utilisation d'un mélange de colorants suivant au moins l'une quelconque des revendications 1 à 10, pour teindre un matériau fibreux contenant des groupements hydroxy et/ou carbonamide.

14. Procédé pour teindre un matériau fibreux contenant des groupements hydroxy et/ou carbonamide, dans lequel on applique un colorant ou un mélange de colorants sous forme diluée sur le matériau et on fixe le ou les colorants sur le matériau au moyen de chaleur et/ou à l'aide d'un agent à action alcaline, caractérisé en ce qu'on utilise comme colorants, un mélange de colorants suivant au moins l'une quelconque des revendications 1 à 10.

15. Composé azoïque correspondant à la formule générale (3A) 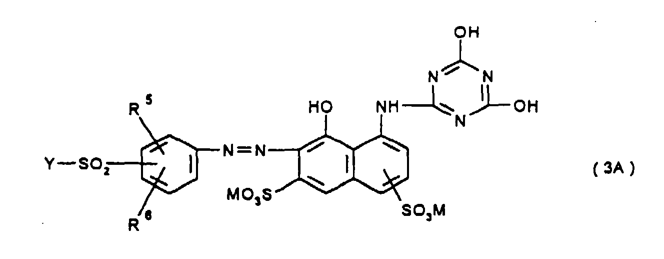 dans laquelle :
M est un hydrogène ou un métal alcalin;
R⁵ est un hydrogène, un méthyle, un éthyle, un méthoxy, un éthoxy ou un sulfo;
R⁶ est un hydrogène, un méthyle, un éthyle, un méthoxy ou un éthoxy;
Y est un vinyle, un β-chloroéthyle, un β-thiosulfatoéthyle ou un β-sulfatoéthyle;
un groupement -SO₃M est lié, en position méta ou para au groupement triazinylamino.

16. Composé azoïque suivant la formule générale (3B) 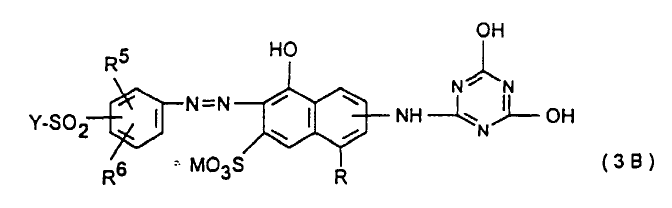 dans laquelle :
M est un hydrogène ou un métal alcalin;
R est un hydrogène ou un sulfo;
R⁵ est un hydrogène, un méthyle, un éthyle, un méthoxy, un éthoxy ou un sulfo;
R⁶ est un hydrogène, un méthyle, un éthyle, un méthoxy ou un éthoxy;
Y est un vinyle, un β-chloroéthyle, un β-thiosulfatoéthyle ou un β-sulfatoéthyle;
le groupement triazinylamino est lié, dans le cas où R est égal à un hydrogène, en position 2 ou 3 et dans le cas où R est égal à un sulfo, en position 3 sur le radical 6-sulfo-8-hydroxynapht-7-yle.

17. Procédé de préparation d'un composé de formule générale (3A) ou (3B) suivant la revendication 15 ou 16, caractérisé en ce que l'on couple à une température entre 5 et 35°C et un pH entre 4 et 7, un composé de formule générale (4b) ou, selon le cas, (5b) 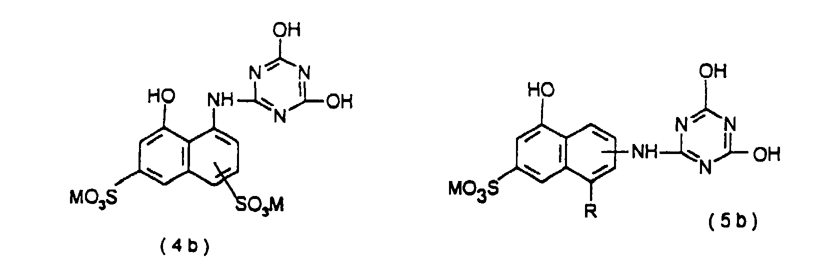 dans lesquelles M possède la signification citée ci-dessus et le groupement dihydroxytriazinylamino dans la formule (5b) est lié dans le cas où R est égal à un hydrogène en position 2 ou 3 et dans le cas où R est égal à un sulfo, en position 3 sur le radical 6-sulfo-8-hydroxynapht-2-yle, avec le sel de diazonium d'un composé amino de formule générale (6) 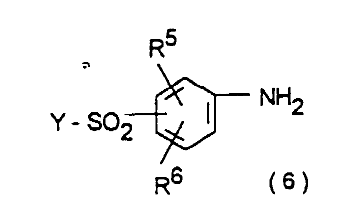 dans laquelle Y, R⁵ et R⁶ ont les significations citées à la revendication 12.

18. Utilisation d'un composé azoïque suivant la revendication 15 ou d'un composé azoïque suivant la revendication 16 pour teindre un matériau fibreux contenant des groupements hydroxy et/ou carbonamide.

19. Procédé pour teindre un matériau fibreux contenant des groupements hydroxy et/ou carbonamide, dans lequel on applique un colorant sous forme diluée sur le matériau et on fixe le ou les colorants sur le matériau au moyen de chaleur et/ou à l'aide d'un agent à action alcaline, caractérisé en ce qu'on utilise comme colorant un composé azoïque suivant la revendication 15 ou un composé azoïque suivant la revendication 16.
